# EUROPÄISCHE PATENTSCHRIFT

(11) **EP 4 028 667 B1**
(45) Veröffentlichungstag und Bekanntmachung des Hinweises auf die Patenterteilung: **30.10.2024**
(21) Anmeldenummer: 20772240.6
(22) Anmeldetag: 09.09.2020
(51) Int. Cl.: F04D 29/32

(54) **MANTELSTROMTRIEBWERK MIT MINDESTENS EINER DREHMOMENTSTUFE**
DUCTED-FAN ENGINE WITH AT LEAST ONE TORQUE STAGE
TURBORÉACTEUR À DOUBLE FLUX PRÉSENTANT AU MOINS UN ÉTAGE DE PRODUCTION DE COUPLE

(30) Priorität: 11.09.2019 DE 102019006484
(43) Veröffentlichungstag der Anmeldung: 20.07.2022
(73) Patentinhaber: Grimm, Friedrich, 70376 Stuttgart (DE)
(72) Erfinder: Grimm, Friedrich, 70376 Stuttgart (DE)
(74) Vertreter: RDL Patentanwälte PartG mbB
(86) Internationale Anmeldenummer: PCT/EP2020/075238
(87) Internationale Veröffentlichungsnummer: WO 2021/048230

(56) Entgegenhaltungen:
- EP-A1- 3 315 787
- DE-A1- 2 044 274
- DE-B4- 102008 005 163
- GB-A- 2 179 405
- US-A- 5 103 635
- US-A1- 2018 119 705
- US-A1- 2018 231 016

## Beschreibung

Die Bezeichnung Mantelstromtriebwerk betrifft im Rahmen der Erfindung die Anordnung von zwei unterschiedlich großen Ringflügeln mit Saug- und Druckseiten, die im Betrieb des Mantelstromtriebwerks eine Mantelströmung bewirken. Dementsprechend betrifft die Erfindung ein Mantelstromtriebwerk, das dazu ausgebildet ist, Schub für ein Flugzeug oder für ein Wasserfahrzeug zu erzeugen und in Schubrichtung mindestens eine von einem in Schubrichtung vorangestellten kleineren Ringflügel und von einem nachfolgenden größeren Ringflügel gebildete Drehmomentstufe aufweist. Mit Bezug zu dem Begriff Druckpunkt, der an dem Flügelprofil einer Tragfläche den Schnittpunkt der Luftkraftresultierenden mit der Profilsehne an etwa einem Drittel der Flächentiefe bezeichnet, wird im Rahmen der Erfindung der Begriff Druckpunktlinie für einen Ringflügel analog verwendet. Die Ringflügel haben jeweils Wirkungsebenen mit kreisförmigen Druckpunktlinien, deren Mittelpunkte auf einer Rotationsachse für mindestens einen mittels von Rotorblättern mit einer Nabe verbundenen Ringflügel liegen. Die Druckpunktlinien der beiden Ringflügel sind entlang der Rotationsachse der Länge nach so hintereinander angeordnet und durch eine radiale Höhe derart voneinander beabstandet, dass die beiden Ringflügel einen zweischichtigen Mantel bilden, der bevorzugt im Betrieb des Fahrzeugs fluiddynamisch als Drehmomentstufe wirksam ist. Der Ringflügel mit dem kleineren Radius weist eine innere, der Rotationsachse zugewandte Saugseite und eine äußere Druckseite auf und bildet in einer von den Rotorblättern induzierten Strömung einen Leitring, der zusammen mit der Flügelnase des größeren Ringflügels die ringförmige Leitdüse mit Leitflächen für die Anströmung des größeren Ringflügels mit einem konvergenten oder divergenten Konuswinkel bildet. Beide Ringflügel weisen in der mit einem Schnittwinkel von 20-90 Grad gegenüber der jeweiligen Wirkungsebene geneigten Schnittebene durch den betreffenden Mittelpunkt auf der Rotationsachse ein strömungsdynamisch wirksames, asymmetrisches Flügelprofil mit einer Profiltiefe, mit einer in Schubrichtung ausgerichteten Flügelnase und mit einer sich zwischen der Flügelnase und der Flügelhinterkante erstreckenden Profilsehne auf, sodass die Drehmomentstufe innerhalb der Strömung bevorzugt an mindestens einem der beiden Ringflügel ein Drehmoment an der Rotationsachse bewirkt. Eine bevorzugte Anwendung für das Mantelstromtriebwerk betrifft Flugzeuge, mit Propfantriebwerken oder mit luftatmenden Strahltriebwerken, die jeweils mindestens eine Drehmomentstufe aufweisen. Das Flugzeug selbst kann als ein Verkehrsflugzeug oder als eine unbemannte Drohne ausgebildet werden. Bei einer bevorzugten Ausführungsform ist das Mantelstromtriebwerk verschwenkbar an die Tragflächen des Flugzeugs angelenkt, wobei die Saugseite des größeren Ringflügels als ein Reifen ausgebildet ist, sodass ein Fahrwerk für das Flugzeug gebildet wird. Eine bevorzugte Anwendung für das Mantelstromtriebwerk mit der mindestens einen Drehmomentstufe betrifft Propeller für Wasserfahrzeuge der entweder als Festpropeller oder als Verstellpropeller oder als Ruderpropeller ausgebildet werden können. Bei einem Jetantrieb für ein Wasserfahrzeug ist das Mantelstromtriebwerk innerhalb eines feststehenden Mantels des Wasserfahrzeugs angeordnet.

### Stand der Technik

Strahltriebwerke für Flugzeuge arbeiten ganz oder teilweise nach dem Rückstoßprinzip, indem sie als luftatmende Triebwerke einen gegen die Flugrichtung gerichteten Abgasstrahl ausstoßen, sodass in einer Gegenreaktion Schub in Flugrichtung des Flugzeugs erzeugt wird. Bei einem Turboprop-Mantelstromtriebwerk wird die Rotationsleistung an der Propellerwelle von einer Gasturbine erzeugt. Ein Strahltriebwerk kombiniert den Rückstoß eines Mantelstromtriebwerks mit dem von einem Fan bewirkten Rückstoß des Mantelstroms. Die hohe Energiedichte heute verfügbarer elektrochemischer Energiespeicher ermöglicht elektrisch betriebene Mantelstromtriebwerke mit einem Fan, der ebenfalls nach dem Rückstoßprinzip arbeitet. Entsprechendes gilt auch für sogenannte Wasser-Jet-Antriebe, die innerhalb einer fest mit dem Fahrzeug verbundenen Düse einen Wasserstrahl erzeugen. Für den Antrieb eines Wasserfahrzeugs ist eine Propellerdüse bekannt, bei der ein Propeller von einer Düse umgeben ist. Die Düse besteht aus einer sich in Fahrtrichtung verjüngenden Konfusorstufe und einer sich an die Düsenverengung anschließenden Diffusorstufe und ist dazu ausgebildet, die an der Konfusorstufe beschleunigte Strömung auf die Rotorblätter der Schiffsschraube zu lenken, um insbesondere bei langsam fahrenden Wasserfahrzeugen den Propellerschub zu erhöhen. Der im Inneren der Propellerdüse angeordnete Propeller ist mit dem Wasserfahrzeug über eine entlang der Längsachse starr gelagerte Propellerwelle mit einer Antriebseinheit im Inneren des Schiffes verbunden. Die Düse selbst wird auch als Kortdüse bezeichnet und ist fest mit dem Schiffsrumpf verbunden. Im Abstrom der Kortdüse dient ein bewegliches Ruder der Steuerung des Wasserfahrzeugs. Insbesondere bei Schleppern werden heute Düsenpropeller genutzt, die in allen Richtungen drehbar sind und mit dem Bug und Heck des Schleppers verbunden sind, um eine gute Manövrierbarkeit zu erzielen. Der Düsenpropeller wird in diesem Fall auch als Ruderpropeller bezeichnet, wobei die Steuerung des Fahrzeugs hier durch einen Schubvektor erfolgt, der sich aus dem Propellerabstrom und dem Düsenschubvektor zusammensetzt. Der Wirkungsgrad herkömmlicher Propellerantriebe ist unbefriedigend. Von einem Lüfterrad sind Bauformen bekannt, bei denen radiale Rotorblätter an ihrem äußeren Ende durch einen Ring untereinander verbunden sind.

Aus der US 5 096 382 A geht ein Propeller mit einem aus drei Segmenten aufgebauten Ringflügel hervor. Die Ringflügelsegmente weisen jeweils an den Verbindungsstellen zu drei radialen Rotorblättern eine abrupte Änderung des Steigungswinkels ihrer Profilsehne auf, sodass der Propeller von der Kreisringform abweicht.

Aus der EP 0 244 515 A2 geht eine Anordnung für einen Fan hervor, bei zwei gegensinnig rotierende Verstellpropeller mit zwei getrennten Naben und mit einer gemeinsamen flügelförmig profilierten Hülse verbunden sind, um ein Luftstrahltriebwerk zu bilden.

Aus der EP 2 799 334 A1 geht ein Propeller hervor, bei dem die mit einer Nabe und mit einem Ringflügel verbundenen radialen Rotorblätter verstellbar sind. Der Ringflügel bildet zusammen mit einer kreisringförmigen Öffnung am Heck eines Luftfahrzeugs eine Ringdüse.

Aus der EP 3 315 787 A1 geht ein Ringflügel und eine Anordnung von zwei hintereinander angeordneten Ringflügeln hervor, die jeweils in der Startphase eines Luftfahrzeugs von einer konusförmigen Strömung angeströmt werden und dazu ausgebildet sind, Schub zu erzeugen. Die Innenseite der Ringflügel ist zu der Rotationsachse eines Mantelstromtriebwerks orientiert, wobei die Ringflügel mit einem horizontalen Abstand zueinander angeordnet sind. Die Höhe des hinteren Rotors ist geringer als die Höhe des vorderen Rotors.

Aus der FR 3 030 445 A1 geht ein Ringflügelpropeller für den Turboprop-Antrieb eines Flugzeugs hervor, bei dem die radialen Rotorblätter verstellbar sind und an ihrem inneren Ende mit einer Nabe und an ihrem äußeren Ende mit einem Ringflügel verbunden sind. Im Sinne der Verstellbarkeit der radialen Rotorblätter liegt die konvex gewölbte Innenseite des Ringflügels an der Ringaußenseite. Mit dieser Anordnung ist es nicht möglich eine Schubkraft zu generieren.

Aus der DE 10 2015 209 673 A1 geht ein Mantelpropeller hervor, bei dem ein feststehender Ringflügel eine konvexe Außenseite aufweist und einen Statorring sowie einen mit den Rotorblattspitzen verbundenen Läuferring für einen Doppelspulenakkumulator aufnimmt.

Aus der WO 2009/153124 A2 geht ein feststehender Ringflügel hervor, der den Elektroantrieb für mindestens zwei hintereinander rotierende, nabenlose Propeller aufnimmt.

Aus der EP 1 502 852 A1 geht eine Flugmaschine mit zwei gegenläufigen, in einem äußeren Ring gelagerten Propellern hervor.

Die GB 2 179 405 zeigt eine Mantelstromgasturbinenmaschine mit einer sehr dünnen, kurzen Kappe, die an einer oder mehreren der Propellerstufen fixiert ist.

Die US 5 103 635 A zeigt einen Gasturbinenantrieb für ein Flugzeug, welcher einen Gasgenerator aufweist.

Die DE 20 44 274 A1 zeigt einen Ringpropeller für einen Schiffsantrieb, wobei vor oder hinter dem Ringpropeller ein zweiter Ring so angebracht ist, dass eine Hochauftriebseinrichtung gebildet wird.

### Aufgabenstellung

Ausgehend von dem dargestellten Stand der Technik besteht die Aufgabe der Erfindung darin, ein neuartiges Mantelstromtriebwerk bereitzustellen, das dazu ausgebildet ist, Schub für ein Flugzeug oder für ein Wasserfahrzeug zu erzeugen.

Die Aufgabe wird mit den im Hauptanspruch genannten Merkmalen erfüllt. Weitere Aufgaben und vorteilhafte Eigenschaften der Erfindung gehen aus den Unteransprüchen hervor.

Eine gestufte Anordnung für zwei unterschiedlich große Ringflügel bildet einen zweischichtigen Mantel, der bevorzugt fluiddynamisch als Drehmomentstufe wirkt. Der kleinere der beiden Ringflügel ist als Leitring für die Anströmung des größeren Ringflügels mit einem Konuswinkel ausgebildet, sodass die von den beiden Ringflügeln gebildete Drehmomentstufe in jeder Betriebsphase eines Luft- oder Wasserfahrzeugs mit einem Konuswinkel angeströmt wird und an mindestens einem rotierenden Ringflügel aus dem Konuswinkel der von dem Mantelstromtriebwerk induzierten Strömung ein Drehmoment bewirkt.

Es sind mehrere Lösungen vorhanden:
- Angabe eines Mantelstromtriebwerks mit einem von zwei Ringflügeln gebildeten, fluiddynamisch aktivierten Mantel
- Angabe eines Mantelstromtriebwerks, mit einer von zwei Ringflügeln gebildeten, ringförmigen Leitdüse für die Anströmung des größeren Ringflügels mit einem Konuswinkel
- Angabe eines Mantelstromtriebwerks, dessen strömungsdynamisch wirksamer Durchmesser größer ist als der konstruktive Durchmesser des größeren Ringflügels.
- Angabe eines Mantelstromtriebwerks, das verschwenkbar an die Tragfläche eines Flugzeugs angelenkt ist, sodass das Flugzeug senkrecht starten und landen kann
- Angabe eines Mantelstromtriebwerks, das als Fahrwerk für ein Flugzeug genutzt werden kann, wobei die Saugseite des größeren Ringflügels als Reifen ausgebildet ist.
- Erzeugung einer tangentialen Antriebskraft in der Wirkungsebene von mindestens einem Ringflügel der Drehmomentstufe
- Erzeugung einer tangentialen Antriebskraft in beiden Wirkungsebenen der Drehmomentstufe
- Erzeugung einer Schubkraft an beiden Ringflügeln der Drehmomentstufe insbesondere im Startbetrieb des Fahrzeugs
- Erzeugung einer Schubkraft an einem feststehenden Ringflügel der Drehmomentstufe
- Angabe eines Mantelstromtriebwerks mit einer Drehmomentstufe für eine Drohne
- Angabe eines Verstellpropellers mit einer Drehmomentstufe für den Antrieb eines Flugzeugs oder eines Wasserfahrzeugs
- Angabe eines Festpropellers mit einer Drehmomentstufe für den Antrieb eines Wasserfahrzeugs
- Angabe eines Ruderpropellers mit einer Drehmomentstufe für den Antrieb und die Steuerung eines Wasserfahrzeugs
- Angabe eines Mantelstromtriebwerks mit einer Drehmomentstufe für die Schubvektorsteuerung eines Luft- oder Wasserfahrzeugs
- Angabe eines Propellers mit einer verstetigten Schubleistung und mit einem schwingungsfreien, gleichmäßigen Umlauf
- Angabe eines leisen Propellers mit einer Drehmomentstufe für eine vergleichsweise sehr geringe Geräuschentwicklung
- Vermeidung der Wirbelbildung und Wirbelablösung an den Blattspitzen der radialen Rotorblätter
- Vermeidung von Kavitation an einem Schiffspropeller
- Erhöhung der Stabilität des Propellers durch eine zweifache Lagerung der Rotorblätter an Nabe und Ringflügel
- Reduktion der Verletzungsgefahr, die von den rotierenden Rotorblättern ausgeht, durch den umgebenden Ring
- Angabe einer um 360 Grad drehbaren Propellergondel für einen Propeller mit einer Drehmomentstufe
- Angabe eines neuartigen Jetantriebs für ein schnelles, seegehendes Schiff
- Angabe eines Mantelstromtriebwerks mit einem Elektroantrieb für Flugzeuge und für Wasserfahrzeuge

### Aufbau des Mantelstromtriebwerks

Das Mantelstromtriebwerk ist dazu ausgebildet ist, Schub für ein Luft- oder Wasserfahrzeugs zu erzeugen und weist mindestens eine Drehmomentstufe auf, die von einem in Schubrichtung vorangestellten kleineren Ringflügel und von einem nachfolgenden größeren Ringflügel gebildet wird. Die Ringflügel haben jeweils Wirkungsebenen mit kreisförmigen Druckpunktlinien, deren Mittelpunkte auf einer Rotationsachse für mindestens einen der Ringflügel liegen und in einer mit einem Schnittwinkel von 20-90 Grad gegenüber der jeweiligen Wirkungsebene geneigten Schnittebene durch den betreffenden Mittelpunkt ein strömungsdynamisch wirksames, asymmetrisches Flügelprofil mit einer Profiltiefe, mit einer in Schubrichtung ausgerichteten Flügelnase und einer sich zwischen der Flügelnase und einer Flügelhinterkante erstreckenden Profilsehne aufweisen. Die Druckpunktlinien der beiden Ringflügel sind entlang der Rotationsachse bzw. auf der Rotationsachse der Länge nach so hintereinander angeordnet und durch eine radiale Höhe derart voneinander beabstandet, dass sie einen zweischichtigen Mantel bilden, der im Betrieb des Fahrzeugs bevorzugt fluiddynamisch als Drehmomentstufe wirkt. Dabei ist der kleinere Ringflügel mit einer der Rotationsachse zugewandten Saugseite und einer äußeren Druckseite in einer von den Rotorblättern induzierten Strömung als ein Leitring ausgebildet, der zusammen mit der Flügelnase des größeren Ringflügels eine ringförmige Leitdüse mit Leitflächen für eine resultierende Anströmung des größeren Ringflügels mit einem konvergenten oder mit einem divergenten Konuswinkel bildet, sodass die Drehmomentstufe bevorzugt an mindestens einem der beiden Ringflügel ein Drehmoment an der Rotationsachse bewirkt. In einer bevorzugten Ausführungsform sind die beiden Ringflügel entlang der Rotationsachse der Länge nach derart voneinander beabstandet, dass sich die Flügelhinterkante des kleineren Ringflügels mit der Flügelnase des größeren Ringflügels überlappt, um die ringförmige Leitdüse zu bilden. Die Ringflügel weisen jeweils in einer mit einem Neigungswinkel gegenüber ihrer Wirkungsebene geneigten Schnittebene ein strömungsdynamisch wirksames Flügelprofil auf.

### Die Profilgestaltung der Ringflügel

Der von dem kleineren Ringflügel gebildete Leitring weist in der mit einem Neigungswinkel gegenüber seiner Wirkungsebene geneigten Schnittebene entweder ein einzelnes asymmetrisches Flügelprofil mit einer der Rotationsachse zugewandten konvexen Innenseite oder ein von zwei asymmetrischen Flügelprofilen gebildetes Tandemprofil auf. Die konvexen Innenseiten der asymmetrischen Flügelprofile des Tandemprofils sind jeweils der Rotationsachse zugewandt, wobei die Profilsehnen in Strömungsrichtung mit Bezug zu der Rotationsachse einen im Betrag zunehmenden Steigungswinkel aufweisen. Die Profilgestaltung eines Ringflügels erfolgt für eine vorgegebene Auslegungsschnelllaufzahl λ innerhalb eines bestimmten Bandbereichs. Das für einen Auftriebsläufer strömungsdynamisch optimale, asymmetrische Flügelprofil liegt an einem rotierenden Ringflügel in der mit einem Neigungswinkel gegenüber der jeweiligen Wirkungsebene geneigten Schnittebene durch den betreffenden Mittelpunkt, wobei der Betrag des Neigungswinkels durch die Auslegungsschnelllaufzahl λ des jeweiligen Ringflügels und die Fahrtgeschwindigkeit des Fahrzeugs vorgegeben ist. An einem feststehenden Ringflügel liegt das strömungsdynamisch wirksame asymmetrische Flügelprofil dementsprechend in einer Schnittebene, die mit einem Neigungswinkel von 90 Grad gegenüber der betreffenden Wirkungsebene der Länge nach durch die Rotationsachse verläuft.

### Mantelstromtriebwerke für Flugzeuge

An einem Mantelstromtriebwerk für ein Flugzeug ist die Drehmomentstufe an einem zweistufigen Fan ausgebildet, der aus zwei mit gegensinniger Drehrichtung um die Rotationsachse rotierenden Verstellpropellern besteht. Beide Ringflügel der Drehmomentstufe sind jeweils mittels von mindestens acht verstellbaren Rotorblättern mit den Naben und mit zwei konzentrisch und koaxial zueinander angeordneten Wellen verbunden. In der Strömung sind die beiden Ringflügel entlang der Rotationsachse der Länge nach und durch eine radiale Höhe als der Differenz zwischen den Radien der kreisförmigen Druckpunktlinien so voneinander beabstandet, dass sie den zweischichtigen Mantel des Mantelstromtriebwerks bilden, der fluiddynamisch als eine zweistufige Drehmomentstufe wirksam ist. Der Abstand der beiden Ringflügel auf der Rotationsachse wird mit der Länge zwischen den Mittelpunkten der kreisförmigen Druckpunktlinien angegeben, wobei die radiale Höhe der Drehmomentstufe durch die Differenz der Radien der kreisförmigen Druckpunktlinien der Ringflügel definiert ist und mindestens die Hälfte der Länge beträgt. Dabei weist die Profilsehne des kleineren Ringflügels einen positiven Steigungswinkel gegenüber der Rotationsachse auf, während die Profilsehne des größeren Ringflügels parallel zu der Rotationsachse ausgerichtet ist. Mit einander zugekehrten Druckseiten bilden die Ringflügel untereinander die ringförmige Leitdüse mit Strömungsleitflächen für die Anströmung des größeren Ringflügels mit einem divergenten Konuswinkel. Diese Anordnung der Ringflügel ist mit dem Vorteil verbunden, dass sich an einem Paar von Ringflügeln eine Zirkulationsströmung an den asymmetrischen Flügelprofilen ausbildet, die sich als ein Zirkulationswirbel an den einander zugekehrten Druckseiten der Ringflügel der Drehmomentstufe verstärkt. Im Startbetrieb eines Flugzeugs rotieren die Rotorblätter, sodass das umgebende Fluid beschleunigt und eine nach hinten gerichtete Strömung erzeugt wird. Aus der Impulsumkehr resultiert der Schub des Mantelstromtriebwerks. Die mit der Beschleunigung der Strömung einhergehende Druckminderung zeigt sich in einer konvergenten Verjüngung der Strömung. Insbesondere in der Startphase eines Flugzeugs induziert das Mantelstromtriebwerk eine konvergente Strömung. An der Drehmomentstufe weist die Profilsehne des kleineren Ringflügels einen Steigungswinkel auf, sodass das asymmetrische Flügelprofil des kleineren Ringflügels in der ersten Wirkungsebene der Drehmomentstufe in der mit dem Neigungswinkel gegenüber der Wirkungsebene geneigten Schnittebene durch den Mittelpunkt einen Anstellwinkel gegenüber der konvergenten Anströmung aufweist. Aus der Strömungsgeschwindigkeit, aus der Umlaufgeschwindigkeit und aus dem in Bezug zu der Rotationsachse konvergenten Konuswinkel resultiert die Anströmung des kleineren Ringflügels, die über den gesamten inneren Umfang die mit einem Versatz an der Rotationsachse angreifende Auftriebskraft bewirkt, aus der in der ersten Wirkungsebene der Drehmomentstufe eine in Drehrichtung wirkende tangentiale Antriebskraft und eine in Flugrichtung des Flugzeugs wirkende Schubkraft hervorgehen. Mit dem Erreichen der Reisefluggeschwindigkeit ist die Strömung nur noch leicht konvergent. Die Flügelhinterkante des kleineren Ringflügels bildet zusammen mit der Flügelnase des größeren Ringflügels die ringförmige Leitdüse für die divergente Anströmung des größeren Ringflügels, dessen Profilsehne bevorzugt parallel zu der Rotationsachse ausgerichtet ist, sodass der divergente Konuswinkel der Strömung als ein Anstellwinkel für die Anströmung des asymmetrischen Flügelprofils an dem größeren Ringflügel wirkt. In der mit einem Neigungswinkel gegenüber der zweiten Wirkungsebene der Drehmomentstufe geneigten Schnittebene bildet sich aus der Strömungsgeschwindigkeit, aus der Umlaufgeschwindigkeit und aus dem in Bezug zu der Rotationsachse divergenten Konuswinkel eine resultierende Anströmung, die über den gesamten äußeren Umfang des größeren Ringflügels eine mit einem Versatz an der Rotationsachse angreifende Auftriebskraft erzeugt. In der zweiten Wirkungsebene der Drehmomentstufe können deshalb aus der Auftriebskraft die in Drehrichtung wirkende tangentiale Antriebskraft und die in Flugrichtung des Flugzeugs wirkende Schubkraft abgeleitet werden. In der vektoriellen Betrachtung der strömungsdynamisch bewirkten Kräfte greift an dem als Auftriebsläufer rotierenden, kleineren Ringflügel die Auftriebskraft an der kreisförmigen Druckpunktlinie in der mit einem Neigungswinkel gegenüber der ersten Wirkungsebene der Drehmomentstufe geneigten Schnittebene an der Innenseite mit einem Versatz zu der Rotationsachse an, während die Auftriebskraft an dem als Auftriebsläufer rotierenden, größeren Ringflügel an der kreisförmigen Druckpunktlinie in der mit einem Neigungswinkel gegenüber der zweiten Wirkungsebene der Drehmomentstufe geneigten Schnittebene an der Außenseite mit einem Versatz zu der Rotationsachse angreift. Die den Ringflügeln jeweils in den mit einem Neigungswinkel von beispielsweise 45 Grad gegenüber den Wirkungsebenen geneigten Schnittebenen einbeschriebenen, asymmetrischen Flügelprofile wirken strömungsdynamisch an beiden Ringflügeln als Auftriebsläufer und weisen jeweils in den Schnittebenen den geringsten Widerstand auf, sodass der Konuswinkel der resultierenden Anströmung in den Schnittebenen eine in die jeweilige Drehrichtung und zu der Schubrichtung der Ringflügel geneigte Auftriebskraft bewirkt, die jeweils mit einem Versatz an der Rotationsachse angreift. Deshalb wird in beiden Wirkungsebenen der Drehmomentstufe für ein Flugzeug ein Drehmoment sowie eine Schubkraft erzeugt. Bei einem Flugzeug kann das Mantelstromtriebwerk verschwenkbar an den Rumpf oder an die Tragflächen angelenkt werden, sodass das Mantelstromtriebwerk ein Fahrwerk bildet, bei dem die Saugseite des größeren Ringflügels einen Reifen aufweist, der als ein Vollgummireifen oder als ein Luftreifen ausgebildet ist.

### Mantelstromtriebwerke für Wasserfahrzeuge

An dem Mantelstromtriebwerk für Wasserfahrzeuge sind die Innenseiten an beiden Ringflügeln jeweils konvex ausgebildet. Eine Ausführungsform des Mantelstromtriebwerks betrifft Festpropeller, bei denen die Rotorblätter starr mit einer Nabe verbunden sind. Dabei sind entweder der kleinere und der größere Ringflügel mittels von drei Rotorblättern und einer Nabe starr mit nur einer Welle verbunden und rotieren mit einer gleichsinnigen Drehrichtung um die Rotationsachse oder der kleinere und der größere Ringflügel sind jeweils starr mittels von drei Rotorblättern mit einer Nabe und mit einer Welle verbunden und rotieren mit einer gegensinnigen Drehrichtung um die Rotationsachse, wobei die Wellen konzentrisch und koaxial zueinander angeordnet sind und eine der Wellen als eine Hohlwelle ausgebildet ist. Eine weitere Ausführungsform des Mantelstromtriebwerks betrifft Verstellpropeller, bei denen die Rotorblätter verstellbar mit mindestens einem der Ringflügel und mit einer Nabe verbunden sind. Dabei ist z.B. der kleinere Ringflügel am Heck feststehend mit dem Unterwasserschiff des Wasserfahrzeugs verbunden, während der größere Ringflügel mit z. B. drei verstellbaren Rotorblättern, mit der Nabe und mit der Welle verbunden ist und um die Rotationsachse rotiert. Dabei sind die beiden Ringflügel auf der Rotationsachse der Länge nach und durch eine Höhe derart voneinander beabstandet, dass sie sich in Richtung der Strömung überlappen und untereinander die Drehmomentstufe bilden, wobei die konvexen Saugseiten beider Ringflügel der Rotationsachse zugekehrt sind, sodass der größere Ringflügel mit einer konvexen Saugspitze und der als feststehender Leitring ausgebildete kleinere Ringflügel mit einer konkaven äußeren Druckseite die ringförmige Leitdüse für die Anströmung des größeren Ringflügels mit einem konvergenten Konuswinkel bildet. In der ersten und in der zweiten Wirkungsebene der Drehmomentstufe bewirken beide Ringflügel eine Schubkraft, wobei aus der Auftriebskraft an dem rotierenden größeren Ringflügel über den gesamten äußeren Umfang in der zweiten Wirkungsebene der Drehmomentstufe eine in Drehrichtung wirkende, mit einem Versatz an der Rotationsachse angreifende tangentiale Antriebskraft und eine in Fahrtrichtung des Wasserfahrzeugs wirkende Schubkraft resultieren. Das Mantelstromtriebwerk weist im Falle eines Verstellpropellers Rotorblätter auf, die an einer radialen Drehachse drehbar mit der Nabe und dem Ringflügel verbunden sind, sodass ein variabler Anstellwinkel der Rotorblätter ermöglicht wird. Eine weitere Ausführungsform für einen Verstellpropeller mit einer Drehmomentstufe betrifft einen Ruderpropeller, der um eine vertikale Achse drehbar mit dem Unterwasserschiff des Wasserfahrzeugs verbunden ist, bei dem der größere Ringflügel feststehend ausgebildet ist und eine parallel zu der Rotationsachse ausgerichtete Profilsehne sowie eine konvexe Innenseite mit einer konvexen Saugspitze aufweist. Der kleinere Ringflügel ist mittels von verstellbaren Rotorblättern mit der Nabe und mit der Welle verbunden und bildet als ein Verstellpropeller den Leitring für eine bezüglich der Rotationsachse konvergente Anströmung des größeren Ringflügels. Dabei ist die konkave Außenseite des kleineren Ringflügels mit einem Abstand zu der konvexen Saugspitze des größeren Ringflügels angeordnet, sodass die Leitdüse für die Anströmung des größeren Ringflügels gebildet wird.

In der ersten Wirkungsebene der Drehmomentstufe bewirkt die aus der Strömungsgeschwindigkeit, aus der Umlaufgeschwindigkeit und aus dem konvergenten Konuswinkel resultierende Anströmung des kleineren Ringflügels eine in Drehrichtung wirkende, mit einem Versatz an der Rotationsachse angreifende Auftriebskraft, aus der in der ersten Wirkungsebene die tangentiale Antriebskraft und eine in Fahrtrichtung des Wasserfahrzeugs wirkende Schubkraft ableitbar sind. In der zweiten Wirkungsebene der Drehmomentstufe erzeugt der feststehende größere Ringflügel eine an der kreisförmigen Druckpunktlinie angreifende Auftriebskraft, aus der eine Schubkraft ableitbar ist. Die Ausführungsformen für Fest- und Verstellpropeller betreffen Drehmomentstufen, bei denen bevorzugt mindestens ein rotierender Ringflügel ein Drehmoment und eine Schubkraft und ein feststehender Ringflügel eine Schubkraft bewirkt. Bei einem vorgegebenen Rotordurchmesser zeichnet sich das Mantelstromtriebwerk durch eine vergleichsweise größere Antriebsleistung aus. Für ein schnellfahrendes, seegehendes Schiff wird ein Festpropeller oder ein Verstellpropeller jeweils mit mindestens einer Drehmomentstufe vorgeschlagen, bei dem das Mantelstromtriebwerk innerhalb eines von dem Unterwasserschiff des Schiffs gebildeten Mantels angeordnet ist und mittels mindestens einer Welle mit einem im Inneren des Schiffs arbeitenden Elektroantrieb verbunden ist, sodass ein Jetantrieb für das schnellfahrende, seegehende Schiff gebildet wird, der bevorzugt an dem nach strömungsdynamischen Gesichtspunkten gestalteten Unterwasserschiff im Bereich des Hecks angeordnet ist. Eine besonders vorteilhafte Anordnung für einen Verstellpropeller betrifft eine stromlinienförmig gestaltete Maschinengondel, die den elektrischen Antrieb aufnimmt und mit einer vertikalen Drehachse an dem Unterwasserschiff aufgehängt ist, sodass die Maschinengondel mit dem Propeller um 360° rotierbar ist. Im Schiffsinneren befindet sich für die Stromversorgung des Elektromotors entweder ein elektrochemischer Energiespeicher oder eine Gasturbine mit einem Generator.

Derartige Pod-Antriebe verbessern die Manövrierbarkeit großer Schiffe erheblich und erhöhen damit die Sicherheit in eng begrenzten Wasserstraßen.

Die Figuren zeigen unterschiedliche Ausführungsformen und Anwendungen der Erfindung. Die in den Figuren dargestellten Detailschnitte der Drehmomentstufe zeigen jeweils die strömungsdynamisch wirksamen, asymmetrischen Flügelprofile in der mit einem Neigungswinkel gegenüber der Wirkungsebene geneigten Schnittebene.

Es zeigen:
Fig. 1 ein Mantelstromtriebwerk für ein Flugzeug mit einem zweistufigen Fan und mit einer Drehmomentstufe des Fans in der perspektivischen Übersicht mit Schnittdarstellung der Ringflügelanordnung an der Drehmomentstufe,
Fig. 2 das Mantelstromtriebwerk nach Fig. 1 mit Darstellung der strömungsdynamisch wirksamen Ringflügelprofile der Drehmomentstufe in einem Längsschnitt parallel zu der Rotationsachse,
Fig. 3 das Mantelstromtriebwerk nach Fig. 1-2 mit Darstellung sämtlicher von der Drehmomentstufe strömungsdynamisch bewirkter Kräfte als Vektoren in einem perspektivischen Schnitt,
Fig. 4 das Mantelstromtriebwerks nach Fig. 1-3 in einer Frontalansicht mit Darstellung der von der Drehmomentstufe bewirkten Drehmomente,
Fig. 5 das Mantelstromtriebwerk nach Fig. 1-4, oben mit einer Schnittdarstellung der Zirkulationsströmung und unten mit Darstellung von Länge und Höhe der Drehmomentstufe in einem schematischen Längsschnitt,
Fig. 6 ein Mantelstromtriebwerk für ein Flugzeug, bei dem die Drehmomentstufe an einem zweistufigen Fan ausgebildet ist und einen Leitring mit einem Tandemprofil aufweist, in der perspektivischen Übersicht,
Fig. 7 das Mantelstromtriebwerk nach Fig. 6 mit Darstellung der strömungsdynamisch wirksamen Ringflügelprofile der Drehmomentstufe in einem Längsschnitt parallel zu der Rotationsachse,
Fig. 8 ein elektrisch angetriebenes Mantelstromtriebwerk für ein Flugzeug mit einem zweistufigen Fan, dem ein Verdichtungsmodul vorangestellt ist, in einem schematischen Querschnitt,
Fig. 9 ein elektrisch angetriebenes Mantelstromtriebwerk für ein Flugzeug mit einem sich an den zweistufigen Fan anschließenden Verdichtungsmodul in einem schematischen Querschnitt,
Fig. 10 ein Flugzeug mit zwei Mantelstromtriebwerken, die dem in Fig. 9 dargestellten Ausführungsbeispiel entsprechen, in einer perspektivischen Übersicht,
Fig. 11 ein elektrisch angetriebenes Flugzeugtriebwerk mit zwei, mit einem Abstand zueinander zweistufigen Fans, oben in einem schematischen Querschnitt der Drehmomentstufe, unten in einem Übersichtsquerschnitt des Mantelstromtriebwerks,
Fig. 12 ein Mantelstromtriebwerk für ein Wasserfahrzeug, das als ein Festpropeller mit zwei gleichsinnig rotierenden Ringflügeln ausgebildet ist, in der perspektivischen Übersicht,
Fig. 13 den Festpropeller nach Fig. 12 in einem schematischen Längsschnitt,
Fig. 14 ein Mantelstromtriebwerk für ein Wasserfahrzeug, das als ein Festpropeller mit einem feststehenden kleineren Ringflügel ausgebildet ist, in der perspektivischen Übersicht,
Fig. 15 den Festpropeller nach Fig. 14 in einem schematischen Längsschnitt,
Fig. 16 den Festpropeller nach Fig. 14-15 in einer Frontalansicht mit Darstellung des von dem größeren Ringflügel bewirkten Drehmoments,
Fig. 17 ein Mantelstromtriebwerk für ein Wasserfahrzeug, das als ein Ruderpropeller mit einem feststehenden größeren Ringflügel ausgebildet ist, in der perspektivischen Übersicht,
Fig. 18 den Ruderpropeller nach Fig. 17 in einem Längsschnitt entlang der Rotationsachse,
Fig. 19 oben einen Jetantrieb für ein Wasserfahrzeug im Übersichtsschnitt und unten in einem schematischen Längsschnitt entlang der Rotationsachse,
Fig. 20 ein von vier Mantelstromtriebwerken angetriebenes Flugzeug, oben im Fahrbetrieb, in der Mitte im Startbetrieb und unten im Flugbetrieb, jeweils in einer perspektivischen Übersicht.

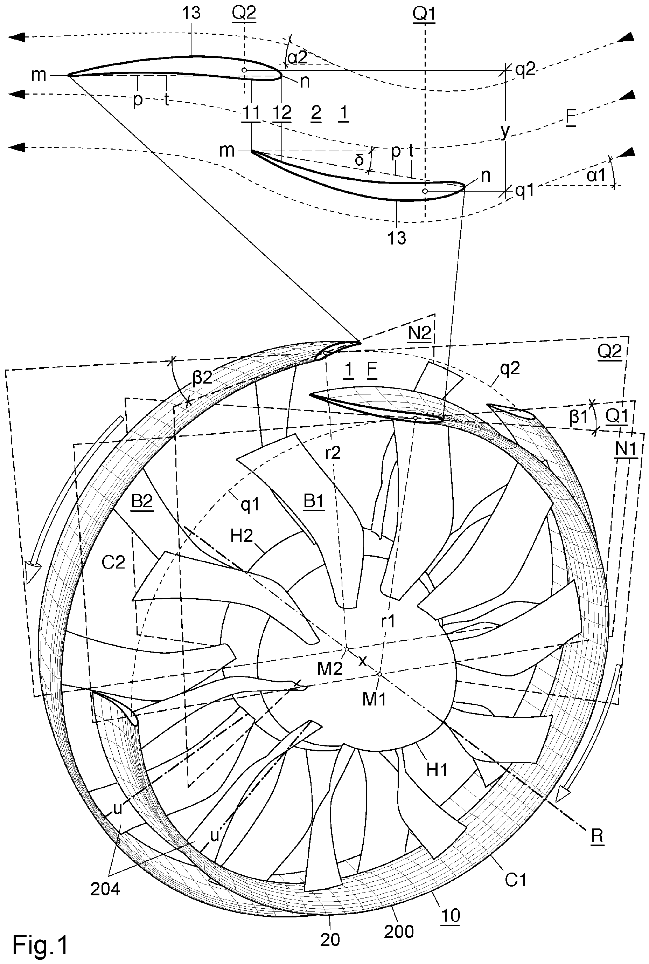

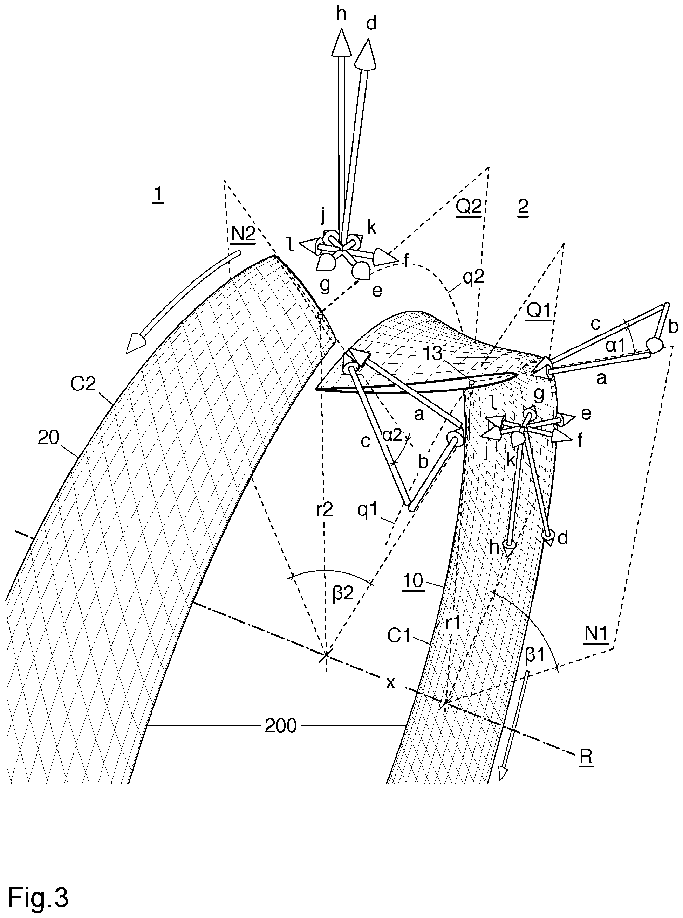

Fig. 1 zeigt ein von einem zweistufigen Fan 200 gebildetes Mantelstromtriebwerk 1, bei dem ein kleinerer Ringflügel C1 mit dem Radius r1 und ein größerer Ringflügel C2 mit dem Radius r2 einen fluiddynamisch wirksamen Mantel 20 mit der Drehmomentstufe 2 bilden. Der kleinere Ringflügel C1 ist mittels von zehn rechtsdrehenden Rotorblättern B1 mit der Nabe H1 am Strömungseinlass des Mantelstromtriebwerks 1 verbunden, während der größere Ringflügel C2 mittels von zehn linksdrehenden Rotorblättern B2 mit der Nabe H2 am Strömungsauslass des Mantelstromtriebwerks 1 verbunden ist. Die Rotorblätter B1,B2 sind jeweils um eine Drehachse u drehbar an den Naben H1,H2 und den Ringflügeln C1,C2 gelagert, sodass der zweistufige Fan 200 aus zwei Verstellpropellern 204 aufgebaut ist. Die Ringflügel C1,C2 weisen jeweils ein asymmetrisches Flügelprofil 13 auf, dessen Profilsehne p sich zwischen einer Flügelnase n und einer Flügelhinterkante m über eine Profiltiefe t erstreckt. In den Wirkungsebenen Q1,Q2 liegen kreisförmige Druckpunktlinien q1,q2, die der Länge x nach einen Abstand zwischen den Mittelpunkten M1,M2 aufweisen und durch eine radiale Höhe y voneinander beabstandet sind. An dem kleineren Ringflügel C1, dessen konvexe Innenseite zur Rotationsachse R orientiert ist, weist die Profilsehne p einen Steigungswinkel δ auf, während an dem größeren Ringflügel C2 die Profilsehne p parallel zu der Rotationsachse R ausgerichtet ist und die konvexe Saugseite an der Außenseite ausgebildet ist. Innerhalb der Strömung F werden die Ringflügel C1,C2 jeweils in den Schnittebenen N1,N2, die mit einem Neigungswinkel β1,β2 gegenüber den Wirkungsebenen Q1,Q2 geneigt sind, schräg überströmt. Das Detail der Drehmomentstufe 2 zeigt das asymmetrische Flügelprofil 13 jeweils in den Neigungsebenen N1,N2 in der innerhalb der Strömung F fluiddynamisch wirksamen Stellung. Die gegenläufig rotierenden Rotorblätter B1,B2 beschleunigen und lenken die Strömung F mit einem konvergenten Konuswinkel α1 zu der Rotationsachse R hin. Der kleinere Ringflügel C1 wird dabei in der Neigungsebene N1 mit dem konvergenten Konuswinkel α1 so angeströmt, dass, wie in Fig.3 gezeigt, aus der Auftriebskraft d in der Wirkungsebene Q1 eine tangentiale Antriebskraft g und eine Schubkraft f resultieren. Dabei bildet der kleinere Ringflügel C1 einen Leitring 10 für eine divergente Umlenkung der Strömung F, sodass der größere Ringflügel C2 mit einem divergenten Konuswinkel α2 angeströmt wird und aus der Auftriebskraft d die Schubkraft f und in der Wirkungsebene Q2 eine tangentiale Antriebskraft g herleitbar sind. Die beiden Ringflügel C1,C2 sind so angeordnet, dass sich die Flügelhinterkante m des kleineren Ringflügels C1 mit der Flügelnase n des größeren Ringflügels C2 überlappt und eine Leitdüse 11 für die divergente Anströmung des größeren Ringflügels C2 bildet.

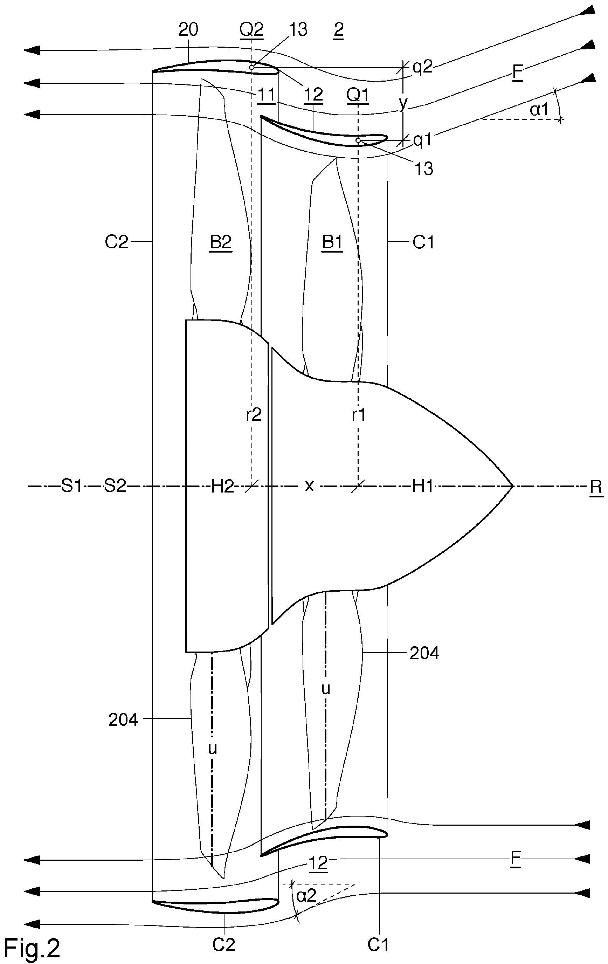

Fig. 2 zeigt das Mantelstromtriebwerk 1 mit der von den Ringflügeln C1,C2 gebildeten Drehmomentstufe 2 in einem Querschnitt entlang der Rotationsachse R mit Darstellung der Strömung F, oben im Startbetrieb eines Flugzeugs und unten bei Erreichen der Fluggeschwindigkeit des Flugzeugs. Während in der Startphase des Flugzeugs die Rotorblätter B1,B2 mit einem Anstellwinkel von etwa 45 Grad gegenüber den Wirkungsebenen Q1,Q2 angestellt sind und viel Luft ansaugen, wird bei Reisefluggeschwindigkeit der kleinere Ringflügel C1 nur noch leicht konvergent angeströmt und bewirkt als Leitring 10 die Anströmung des größeren Ringflügels C2 mit einem divergenten Konuswinkel α2, wobei an dem größeren Ringflügel C2, wie in Fig.3 gezeigt, aus der Auftriebskraft D eine Schubkraft f und eine tangentiale Antriebskraft g abgeleitet werden können.

Fig. 3 zeigt die mit gegensinniger Drehrichtung rotierenden Ringflügel C1,C2 der Drehmomentstufe 2 des in Fig. 1-2 dargestellten Mantelstromtriebwerks 1, jeweils mit Darstellung der strömungsdynamisch bewirkten Kräfte. Der in Schubrichtung des zweistufigen Fans 200 vorauslaufende Ringflügel C1 wird im Startbetrieb eines Flugzeugs mit einem konvergenten Konuswinkel α1' der aus der Strömungsgeschwindigkeit a und der Umlaufgeschwindigkeit b resultierenden Anströmung c so angeströmt, dass an der Druckpunktlinie q1 des Ringflügels C1 in der mit einem Neigungswinkel β1 gegenüber der Wirkungsebene Q1 geneigten Schnittebene N1 eine in der Schnittebene N1 wirksame Auftriebskraft d resultiert, die in eine Sogkraft h und in eine in Drehrichtung wirkende Vortriebskraft e und in den Widerstand j aufteilbar ist. Aus der Vortriebskraft e leitet sich in der Wirkungsebene Q1 die tangentiale Antriebskraft g und die in Flugrichtung wirkende Schubkraft f ab. Der Gegenspieler der Schubkraft f ist der Fahrtwiderstand I und der Gegenspieler der tangentialen Antriebskraft g ist der Rotationswiderstand k. Der Ringflügel C1 weist einen Radius r1 auf und bildet, wie in Fig. 1-2 gezeigt, einen Leitring 10 für die Anströmung des größeren Ringflügels C2 mit dem Radius r2, wobei sich die Ringflügel C1,C2, überlappen und eine Leitdüse 11 für die Anströmung des Ringflügels C2 mit einem divergenten Konuswinkel α2' bilden. Die Saugseite an der Außenseite des Ringflügels C2 bewirkt in der mit einem Neigungswinkel β2 gegenüber der Wirkungsebene Q2 geneigten Schnittebene N2 eine aus der Strömungsgeschwindigkeit a und der Umlaufgeschwindigkeit b resultierenden Anströmung c mit einem divergenten Konuswinkel α2', sodass in der Schnittebene N2 aus der resultierenden Anströmung c die in Schubrichtung und in Drehrichtung geneigte Auftriebskraft d an der Ringaußenseite resultiert. Auch hier teilt sich die Auftriebskraft d in eine Sogkraft h und in eine Vortriebskraft e, aus der sich die in der Wirkungsebene Q2 wirksame tangentiale Antriebskraft g und die in Flugrichtung wirksame Schubkraft f ableiten. Der Widerstand j wirkt der Vortriebskraft e entgegen, während der Rotationswiderstand k der tangentialen Antriebskraft g und der Fahrtwiderstand I der Schubkraft f entgegenwirken.

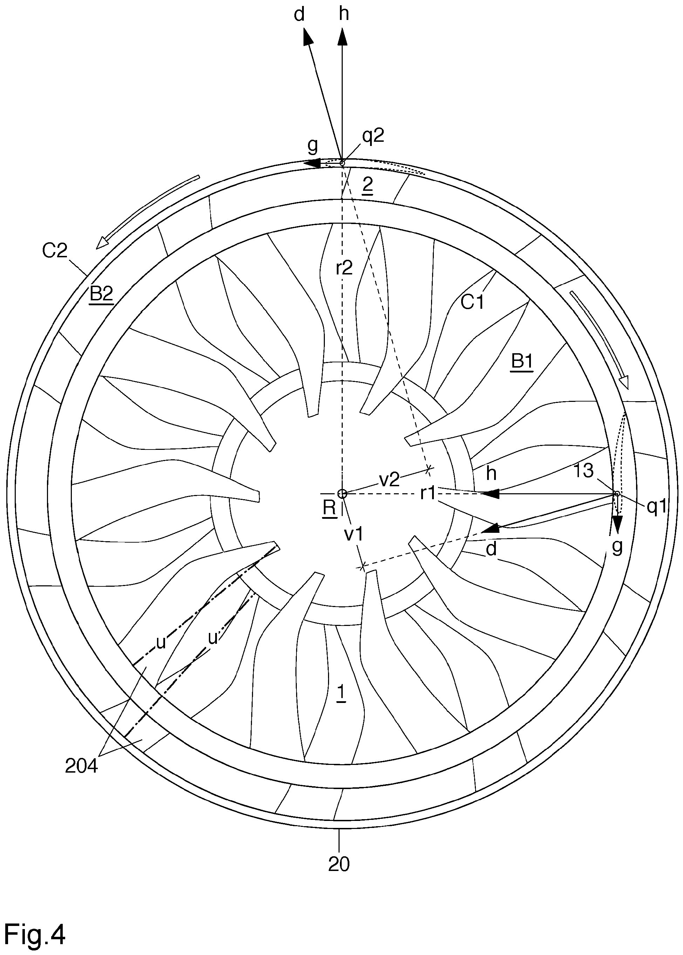

Fig. 4 zeigt die schubseitige Frontalansicht des Mantelstromtriebwerks 1 nach Fig. 1-3 mit dem rechtsdrehenden kleineren Ringflügel C1, der einen Leitring 10 für die Anströmung des linksdrehenden größeren Ringflügels C2 bildet, jeweils mit Darstellung der von den Ringflügeln C1,C2 bewirkten Auftriebskraft d, der Sogkraft h und der tangentialen Antriebskraft g. Die Rotorblätter B1 sind jeweils an ihrem nabenseitigen Ende mit einer Nabe H1 und an ihrem äußeren Ende mit dem Ringflügel C1 verbunden, während die Rotorblätter B2 jeweils an ihrem nabenseitigen Ende mit der Nabe H2 und an ihrem äußeren Ende mit dem Ringflügel C2 verbunden sind. Die Rotorblätter B1,B2 sind jeweils um eine Drehachse u verschwenkbar, sodass der zweistufige Fan 200 von zwei Verstellpropellern 204 gebildet wird.

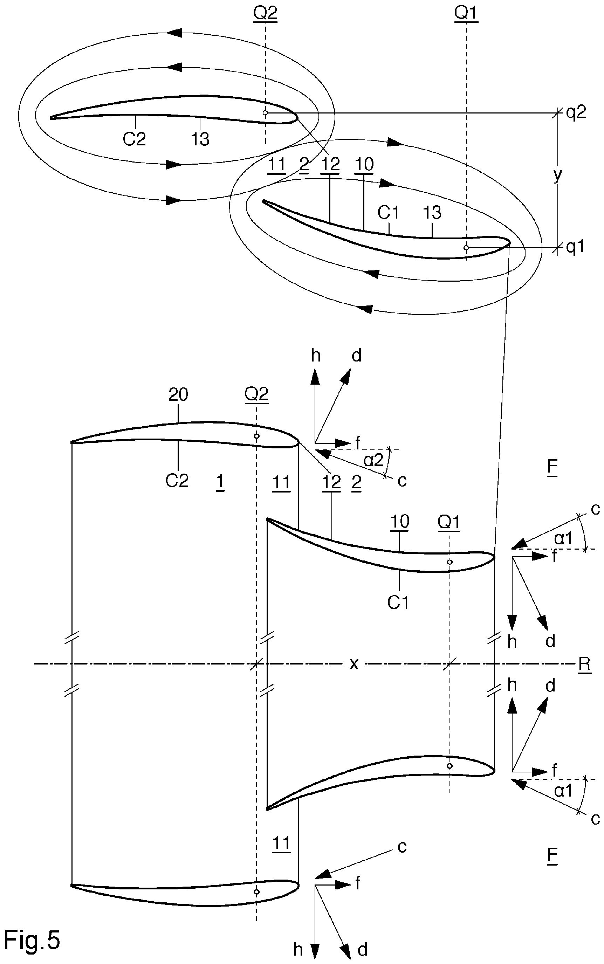

Fig. 5 oben zeigt die in Fig. 1-4 dargestellte Drehmomentstufe 2 mit einer Zirkulationsströmung, die sich im Bereich der von den Ringflügeln C1,C2 gebildeten Leitdüse 11 zu einem Zirkulationswirbel verstärkt. Fig. 5 Mitte und unten zeigt die in Fig. 1-4 dargestellten asymmetrischen Flügelprofile 13 der Drehmomentstufe 2 jeweils in den Schnittebenen N1,N2 der mit gegensinniger Drehrichtung rotierenden Ringflügel C1,C2 mit Darstellung der aerodynamisch bewirkten Kräfte. Die Druckpunktlinien q1,q2 sind durch den Abstand der Mittelpunkte M1,M2 der Länge x nach und durch die radiale Höhe y so voneinander beabstandet, dass die Ringflügel C1,C2 untereinander einen zweischichtigen Mantel 20 und die Leitdüse 11 für die Anströmung des größeren Ringflügels C2 mit einem divergenten Konuswinkel α2 bilden. Die Profilsehne p des kleineren Ringflügels C1 weist einen Steigungswinkel δ gegenüber der Rotationsachse R auf, während die Profilsehne p des größeren Ringflügels C2 bevorzugt parallel zu der Rotationsachse R ausgerichtet ist. Die resultierende Anströmung c des kleineren Ringflügels C1 weist einen konvergenten Konuswinkel α1 auf und bewirkt den Auftrieb d, aus dem in der Wirkungsebene Q1 die Schubkraft f herleitbar ist. Als Leitring 10 bewirkt der kleinere Ringflügel C1 die resultierende Anströmung c des größeren Ringflügels C2 mit dem divergenten Konuswinkel α2, sodass in der Wirkungsebene Q2 der Drehmomentstufe 2 aus der Auftriebskraft d die Schubkraft f resultiert.

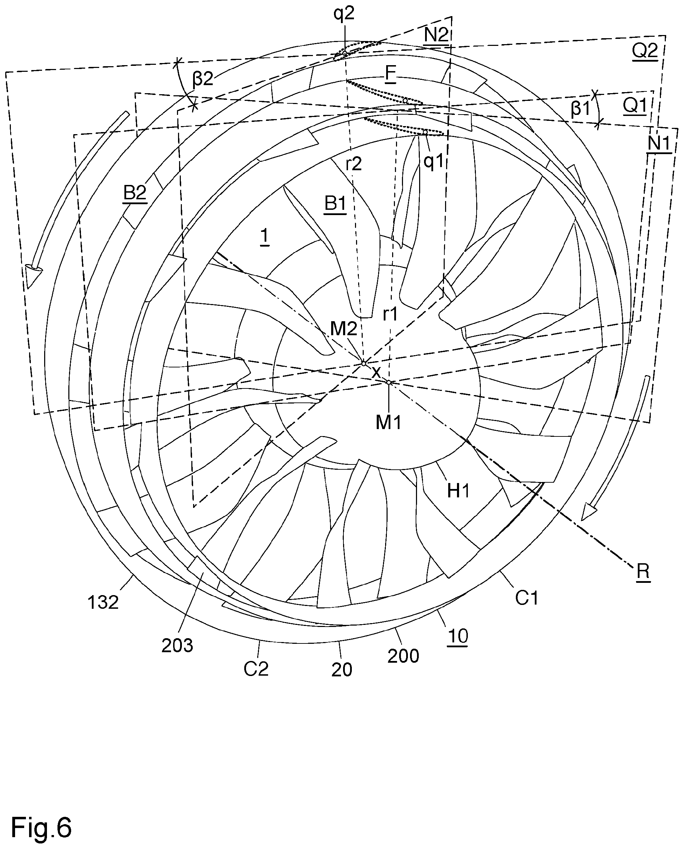

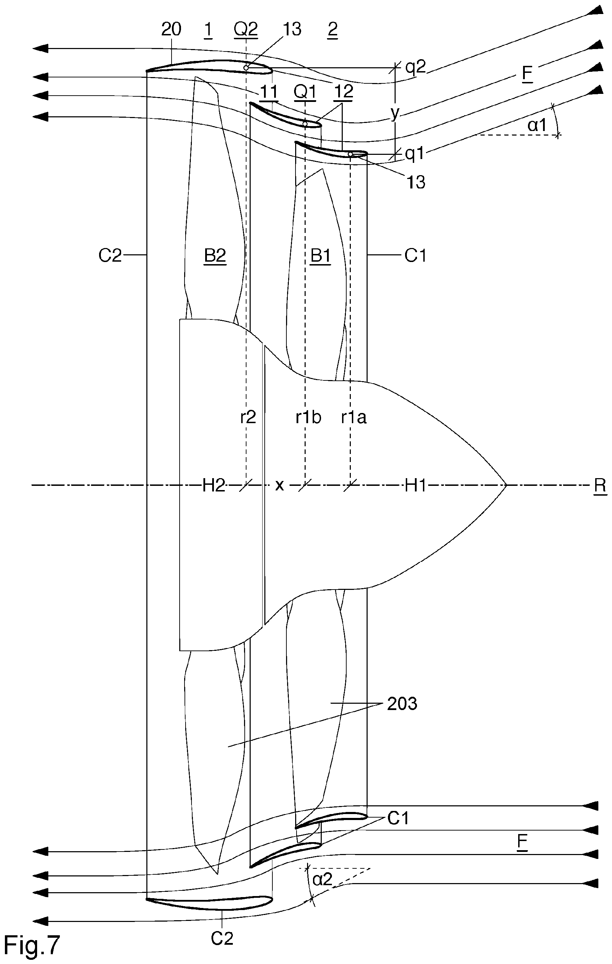

Fig. 6 zeigt einen zweistufigen Fan 200, der aus einem ersten, rechtsdrehenden, von dem kleineren Ringflügel C1, den Rotorblättern B1 und der Nabe H1 gebildeten Festpropeller 203 und aus einem zweiten, linksdrehenden, von dem größeren Ringflügel C2, den Rotorblättern B2 und der Nabe H2 gebildeten Festpropeller 203, besteht. Im Unterschied zu dem in Fig. 1 gezeigten Ausführungsbeispiel, weist der Ringflügel C1 ein Tandemprofil 132 auf, das in Fig. 7 näher erläutert wird und das als ein zweiteiliger Leitring 10 dazu ausgebildet ist, die Anströmung des größeren Ringflügels C2 mit einem deutlich divergenten Konuswinkel α2 zu ermöglichen.

Fig. 7 zeigt das Mantelstromtriebwerk 1 mit der von den Ringflügeln C1,C2 gebildeten Drehmomentstufe 2 in einem Querschnitt entlang der Rotationsachse R mit Darstellung der Strömung F, oben im Startbetrieb eines Flugzeugs und unten bei Erreichen der Reisefluggeschwindigkeit des Flugzeugs. Während in der Startphase des Flugzeugs die Rotorblätter B1,B2 mit einem Anstellwinkel von etwa 45 Grad gegenüber den Wirkungsebenen Q1,Q2 angestellt sind und viel Luft ansaugen, wird bei Fluggeschwindigkeit der kleinere Ringflügel C1 nur noch leicht konvergent angeströmt und bewirkt als ein zweiteiliger Leitring 10 die Anströmung des größeren Ringflügels C2 mit dem divergenten Konuswinkel α2, sodass an dem größeren Ringflügel C2, wie in Fig.3 gezeigt, aus der Auftriebskraft d eine Schubkraft f und eine tangentiale Antriebskraft g abgeleitet werden können. Im Unterschied zu dem in den Fig. 1-5 gezeigten Ausführungsbeispiel, bei dem der kleinere Ringflügel C1 ein einzelnes asymmetrisches Flügelprofil 13 aufweist, weist der Ringflügel C1 hier ein von zwei asymmetrischen Flügelprofilen 13 mit den Radien r1a und r1b gebildetes Tandemprofil 132 auf, das dazu ausgebildet ist, die Strömung F in zwei Stufen umzulenken, sodass der größere Ringflügel C2 mit einem möglichst steilen divergenten Konuswinkel α2 angeströmt wird, um wie in Fig. 3-4 gezeigt, aus der Auftriebskraft d eine tangentiale Antriebskraft g und eine in Flugrichtung wirkende Schubkraft f zu erzeugen.

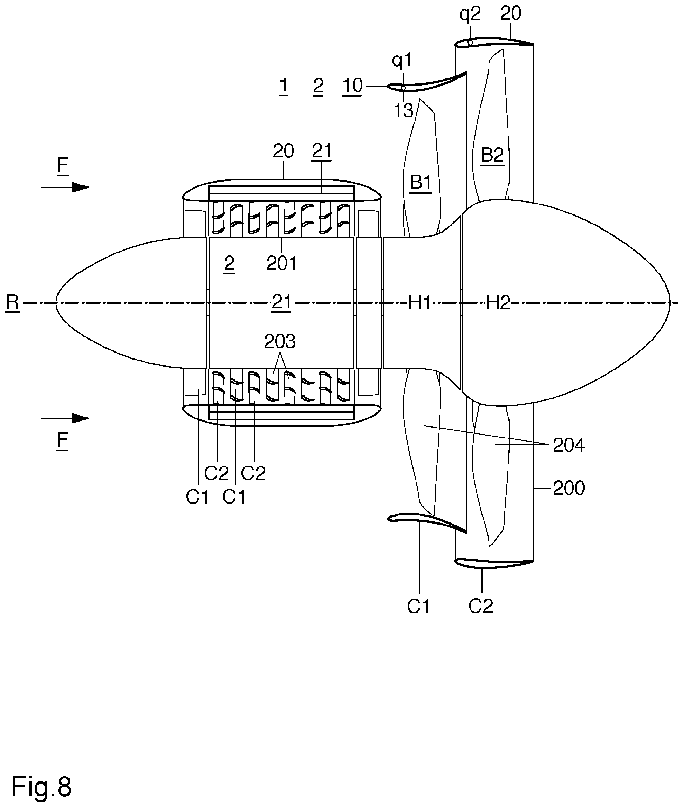

Fig. 8 zeigt ein Mantelstromtriebwerk 1 für ein Flugzeug im schematischen Längsschnitt und teilweise in der Schnittansicht. In Richtung der Strömung F sind auf der Rotationsachse R vier rechtsdrehende und vier linksdrehende Festpropeller 203 hintereinander angeordnet und bilden ein Verdichtermodul 201 mit einem feststehenden Mantel 20', an das sich stromab ein größerer zweistufiger Fan 200 anschließt, der dem in Fig. 1-5 dargestellten Ausführungsbeispiel entspricht. Das von acht Festpropellern 203 gebildete Verdichtermodul 201 weist insgesamt acht Drehmomentstufen 2 auf, deren von den Ringflügeln C1 gebildeten Leitringe 10 jeweils mit einem in den Mantel 20' integrierten Läuferring eines mantelseitigen Elektroantriebs 21 verbunden sind, während die Ringflügel C2 jeweils mit einem Läuferring eines nabenseitigen Elektroantriebs 21 verbunden sind.

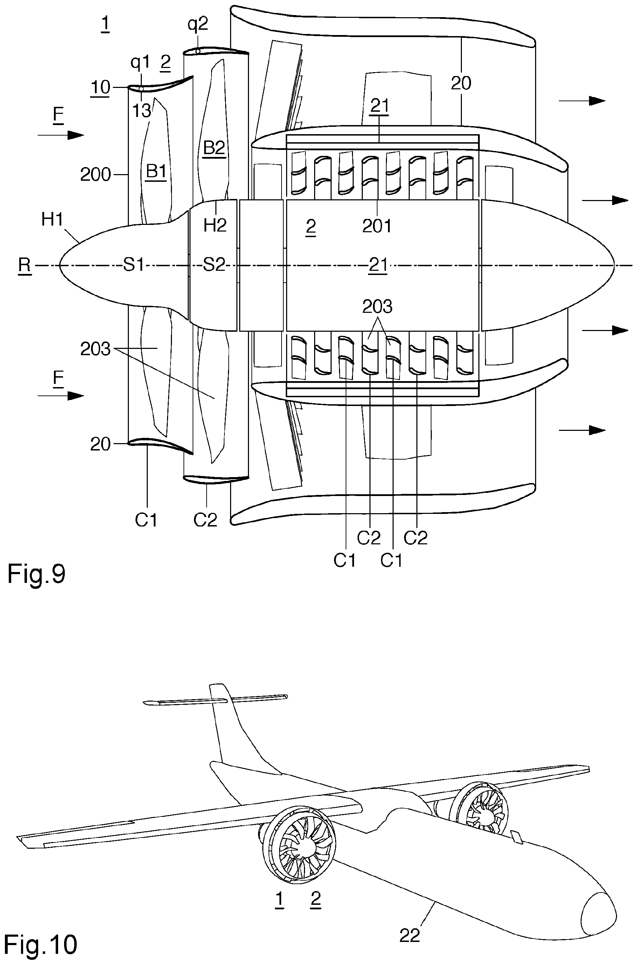

Fig. 9 zeigt ein Mantelstromtriebwerk 1 für ein Flugzeug im schematischen Längsschnitt und teilweise in der Schnittansicht. Der zweistufige Fan 200 entspricht dem in Fig. 1-5 dargestellten Ausführungsbeispiel und weist einen von den Ringflügeln C1,C2 gebildeten fluiddynamisch als Drehmomentstufe 2 wirksamen, zweischichtigen Mantel 20 auf und bildet den Strömungseinlass des Mantelstromtriebwerks 1. Auf den zweistufigen Fan 200 folgt in Richtung der Strömung F ein Verdichtermodul 201 mit insgesamt acht Drehmomentstufen 2, die auf acht mit gegensinniger Drehrichtung rotierende Festpropeller 203 verteilt sind. An die jeweils als Leitringe 10 ausgebildeten Ringflügel C1 schließen sich in Richtung der Strömung F die Ringflügel C2 an. Die Ringflügel C1 sind mit dem Läuferring eines in den feststehenden Mantel 20 des Verdichtermoduls 201 integrierten Elektroantriebs 21 verbunden, während die größeren Ringflügel C2 mit einem nicht näher dargestellten Läuferring eines nabenseitigen Elektroantriebs 21 verbunden sind. Am Strömungsauslass des mehrschalig aufgebauten Mantelstromtriebwerk 1 ist eine Düsenverengung für den ausschließlich aus Luft bestehenden Rückstoß des Mantelstromtriebwerks 1 dargestellt.

Fig. 10 zeigt ein Flugzeug 22 mit zwei Mantelstromtriebwerken 1, die jeweils eine Drehmomentstufe 2 aufweisen im Flugbetrieb.

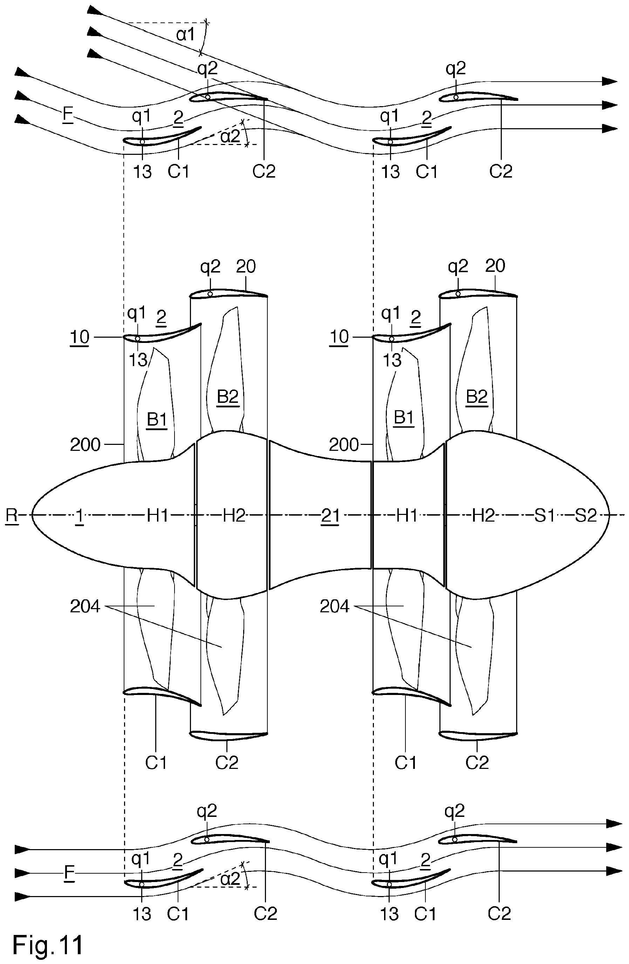

Fig. 11 oben zeigt eine Intervallanordnung für zwei in Richtung der Strömung F aufeinander folgende Drehmomentstufen 2 an dem in Fig. 11 Mitte im Längsschnitt und als Teilansicht dargestellten Mantelstromtriebwerk 1 für ein Flugzeug. Fig. 11 oben zeigt dabei die Strömungsverhältnisse im Startbetrieb des Flugzeugs, wobei der konvergente Konuswinkel α1 jeweils die Anströmung der Ringflügel C1,C2 bestimmt und der Ringflügel C1 einen Leitring 10 für die Anströmung des Ringflügels C2 mit einem divergenten Konuswinkel α2 bildet. Fig. 11 unten zeigt die Intervallanordnung der Drehmomentstufen 2 mit Darstellung der Strömungsverhältnisse bei Reisefluggeschwindigkeit des Flugzeugs, wobei die Ringflügel C2 der Drehmomentstufen 2 jeweils mit dem divergenten Konuswinkel α2 angeströmt werden. Das Mantelstromtriebwerk 1 hat einen nabenseitigen Elektroantrieb 21 für zwei nicht näher dargestellte Wellen S1,S2, die eine gegensinnige Rotation der Ringflügel C1,C2 ermöglichen. Rotorblätter B1,B2 verbinden jeweils die Ringflügel C1,C2 mit den Naben H1,H2.

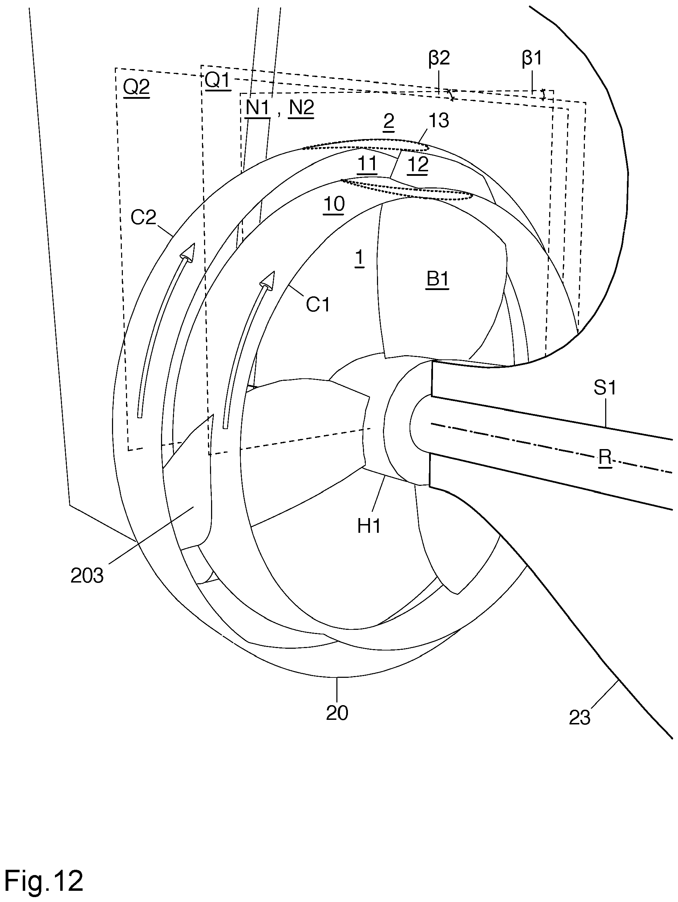

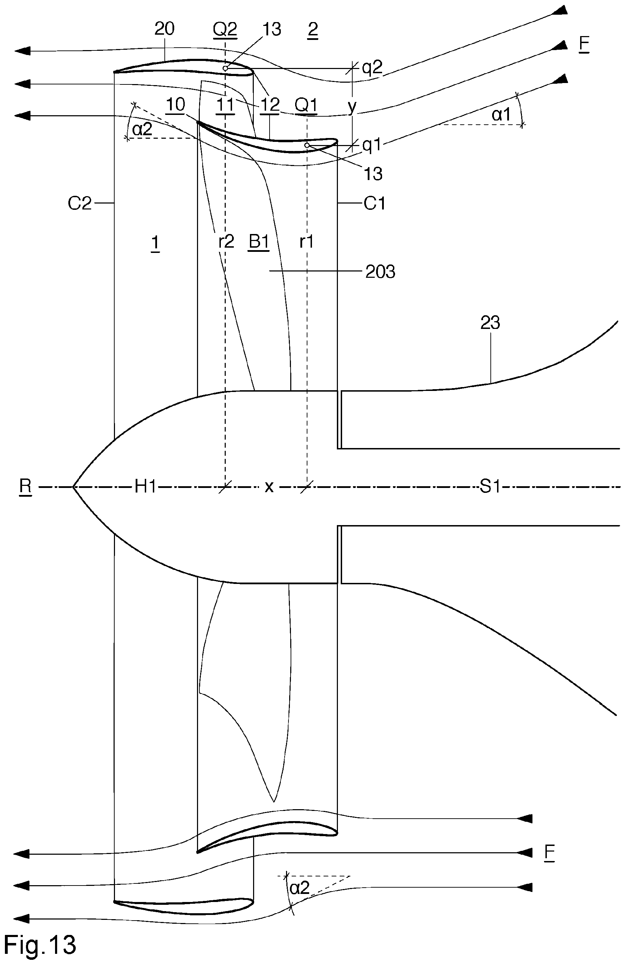

Fig. 12 zeigt ein Mantelstromtriebwerk 1 als Festpropeller 203, der am Heck eines Wasserfahrzeugs 23 mit dem Unterwasserschiff verbunden ist. An dem Festpropeller 203 sind drei Rotorblätter B1 jeweils mit dem kleineren Ringflügel C1 und dem größeren Ringflügel C2 sowie mit der Nabe H1 und der Welle S1 starr verbunden. Die Ringflügel C1,C2 haben eine gemeinsame Drehrichtung und bilden untereinander eine Drehmomentstufe 2 mit der ringförmigen Leitdüse 11 für die Anströmung des größeren Ringflügels C2 mit dem divergenten Konuswinkel α2, wie in Fig. 13 gezeigt. Das asymmetrische Flügelprofil 13 der Ringflügel C1,C2 ist jeweils in den mit einem Neigungswinkel β1,β2 gegenüber den Wirkungsebenen Q1,Q2 geneigten Schnittebenen N1,N2 strömungsdynamisch wirksam.

Fig. 13 zeigt den Festpropeller 203 nach Fig. 12 in einem Längsschnitt entlang der Rotationsachse R mit Darstellung der strömungsdynamischen Wirkung der Drehmomentstufe 2 im Anfahrbetrieb des Wasserfahrzeugs 23 am oberen Ende des Festpropellers 203 und bei Erreichen der Betriebsgeschwindigkeit des Wasserfahrzeugs 23 am unteren Ende des Festpropellers 203. Die Länge x auf der Rotationsachse gibt den Abstand der Ringflügel C1,C2 vor, während Höhe y den radialen Abstand der Druckpunktlinien q1,q2 definiert, wobei sich die konkaven Druckseiten Ringflügel C1,C2 gegenseitig überlappen, um die Leitdüse 11 mit den Leitflächen 12 zu bilden. Der Ringflügel C1 ist als Leitring 10 so geneigt, dass der größere, parallel zu der Rotationsachse R ausgerichtete Ringflügel C2 mit dem divergenten Konuswinkel α2 angeströmt wird.

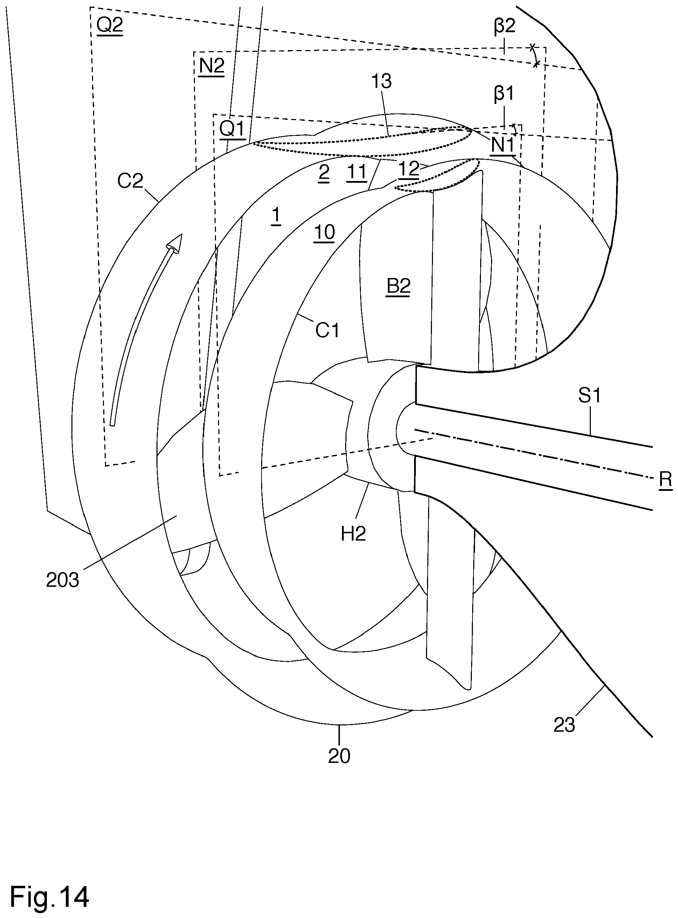

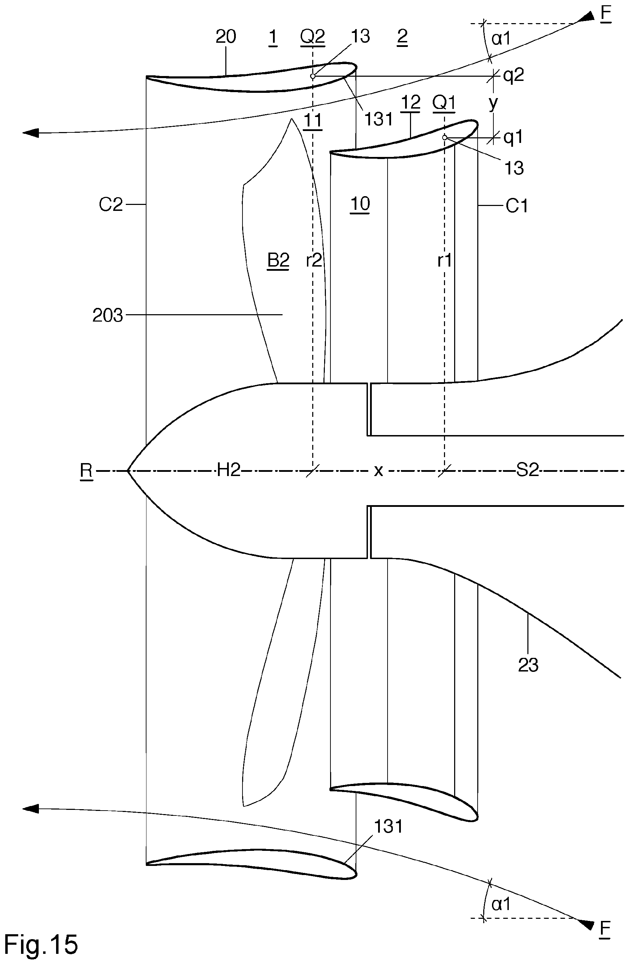

Fig. 14 zeigt ein Mantelstromtriebwerk 1 mit einer Drehmomentstufe 2 am Beispiel eines Festpropeller 203, der am Heck mit dem Unterwasserschiff eines Wasserfahrzeugs 23 verbunden ist. Bei dieser Ausführungsform ist der kleinere Ringflügel C1 feststehend mit dem Heck des Wasserfahrzeugs 23 verbunden und bildet einen Leitring 10 für die Anströmung des größeren Ringflügels C2 mit einem konvergenten Konuswinkel α1, wie in Fig. 15 gezeigt. An dem Festpropeller 203 sind drei Rotorblätter B2 jeweils mit dem größeren Ringflügel C2 sowie mit der Nabe H2 und der Welle S2 starr verbunden.

Fig. 15 zeigt einen Längsschnitt des Festpropellers nach Fig. 14 mit Darstellung der von den Rotorblättern B2 und der Drehmomentstufe 2 bewirkten konvergenten Strömung F mit dem Konuswinkel α1. Der feststehende kleinere Ringflügel C1 und der rechtsdrehende größere Ringflügel C2 bilden eine Drehmomentstufe 2, bei der die konvexe Saugspitze 131 des größeren Ringflügels C2 zusammen mit der konkaven Druckseite des feststehenden Leitrings 10 eine Leitdüse 11 für die Anströmung des größeren Ringflügels C2 mit dem konvergenten Konuswinkel α1 bildet. Die beiden Ringflügel C1,C2 sind auf der Rotationsachse R der Länge x und der Höhe y nach so voneinander beabstandet, dass sie untereinander einen zweischichtigen Mantel 20 mit der Leitdüse 11 für eine konvergente Anströmung des größeren Ringflügels C2 bilden.

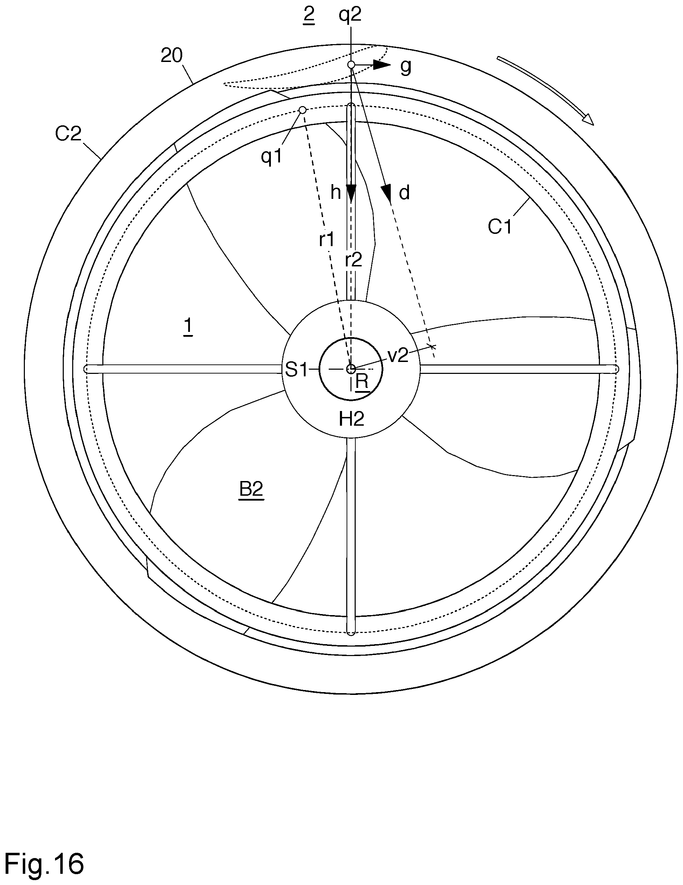

Fig. 16 zeigt den in Fig. 14-15 dargestellten Festpropeller 203 in einer Schnittansicht mit Darstellung des als Leitring 10 ausgebildeten kleineren Ringflügels C1 und des größeren Ringflügels C2, der zusammen mit den Rotorblättern B2 und der Nabe H2 den mit der Welle S2 verbundenen Festpropeller 203 bildet. Die Drehmomentstufe 2, bei der die Saugseiten der Ringflügel C1,C2 der Rotationsachse R zugewandt sind, stellt sicher, dass beide Ringflügel C1,C2 sowohl im Anfahrbetrieb des Wasserfahrzeugs 23 als auch bei Betriebsgeschwindigkeit eine aus der Auftriebskraft d abgeleitete Schubkraft f erzeugen, wobei das asymmetrische Flügelprofil 13 des rotierenden größeren Ringflügels C2, wie in Fig.14 gezeigt, in der mit einem Neigungswinkel β2 gegenüber der Wirkungsebene Q2 geneigten Schnittebene N2 zusätzlich eine tangentiale Antriebskraft g bewirkt. Sowohl an dem feststehenden Ringflügel C1 als auch an dem rotierenden Ringflügel C2 bewirkt die Auftriebskraft d an den kreisförmigen Druckpunktlinien q1,q2 in den Wirkungsebenen Q1,Q2 eine aus der Auftriebskraft d abgeleitete Schubkraft f.

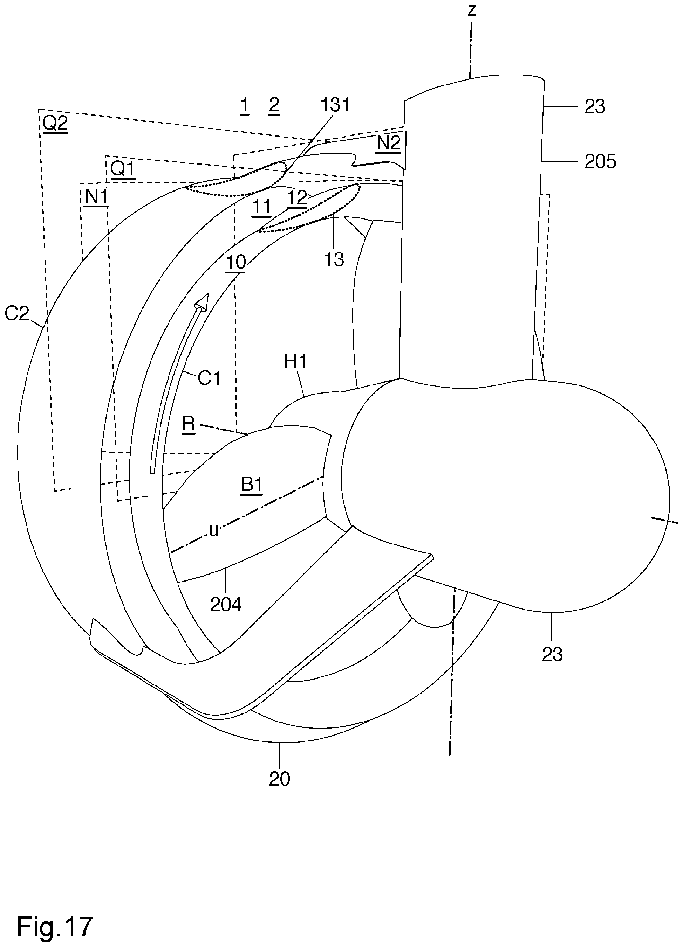

Fig. 17 zeigt ein Mantelstromtriebwerk 1 mit einer Drehmomentstufe 2 an einem Ruderpropeller 205, der um eine vertikale Achse z drehbar an das Unterwasserschiff eines Wasserfahrzeugs 23 angelenkt ist. An dem Ruderpropeller 205 rotiert der kleinere Ringflügel C1 um die Rotationsachse R und ist mittels von drei Rotorblättern B1 mit der Nabe H1 verbunden, während der größere Ringflügel C2 feststehend mit einer Propellergondel verbunden ist. An dem kleineren Ringflügel C1 weist die Schnittebene N1 einen Neigungswinkel β1 von z.B. 45 Grad gegenüber der Wirkungsebene Q1 auf.

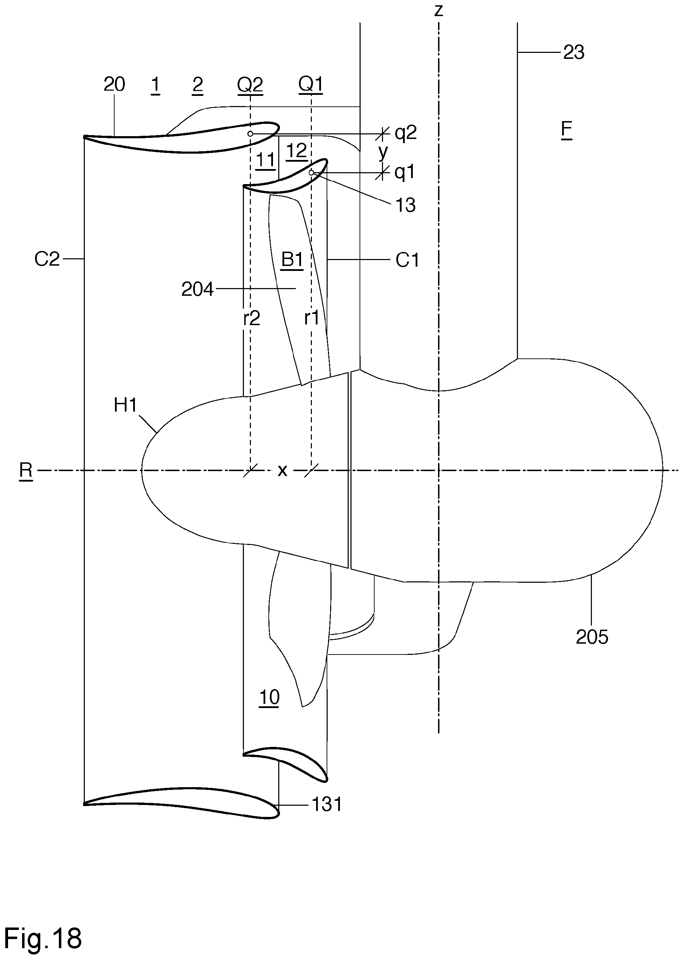

Fig. 18 zeigt das Mantelstromtriebwerk 1 nach Fig. 17 in einem Längsschnitt entlang der Rotationsachse R und in einer Teilansicht. Eine konkave Saugspitze 131 an der zur Rotationsachse R gewandten Saugseite des asymmetrischen Flügelprofils 13 des feststehenden Ringflügels C2 bildet zusammen mit der konkaven Druckseite des asymmetrischen Flügelprofils 13 an dem als Leitring 10 ausgebildeten kleineren Ringflügel C1 die Leitdüse 11 für eine konvergente Anströmung des größeren Ringflügels C2, dessen Schnittebene N2 senkrecht zu der Wirkungsebene Q2 angeordnet ist. Der größere feststehende Ringflügel C2 ist mit drei nicht näher bezeichneten Armen mit der um die Achse z verschwenkbaren Propellergondel verbunden. Aus der konvergenten Anströmung beider Ringflügel C1,C2 resultiert an beiden Ringflügeln eine Schubkraft und an dem rotierenden kleineren Ringflügel C1 eine tangentiale Antriebskraft in der Wirkungsebene Q1.

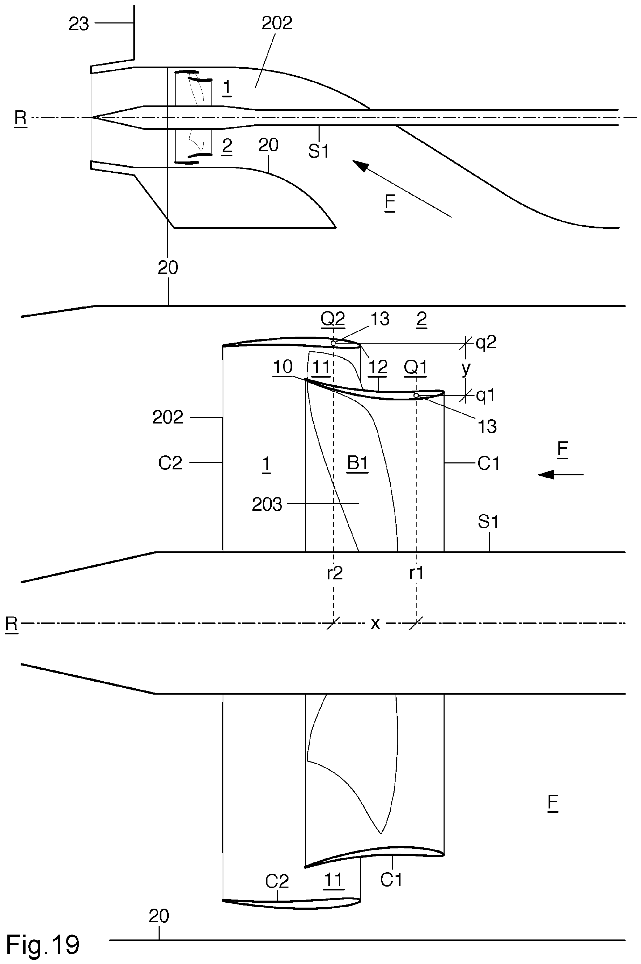

Fig. 19 zeigt ein Mantelstromtriebwerk 1, das für den Jetantrieb 202 eines Wasserfahrzeugs 23 ausgebildet ist. Das Mantelstromtriebwerk 1 ist als Festpropeller 203 ausgebildet, bei dem beide Ringflügel C1,C2 mittels von radialen Rotorblättern B1 mit einer Nabe H1 und einer Welle S1 verbunden sind. Das Mantelstromtriebwerk 1 mit der Drehmomentstufe 2 rotiert innerhalb eines feststehenden Mantels 20", der von dem Unterwasserschiff des Wasserfahrzeug gebildet wird. Der Festpropeller 203 entspricht in seinem Aufbau dem in Fig. 12-13 gezeigten Ausführungsbeispiel.

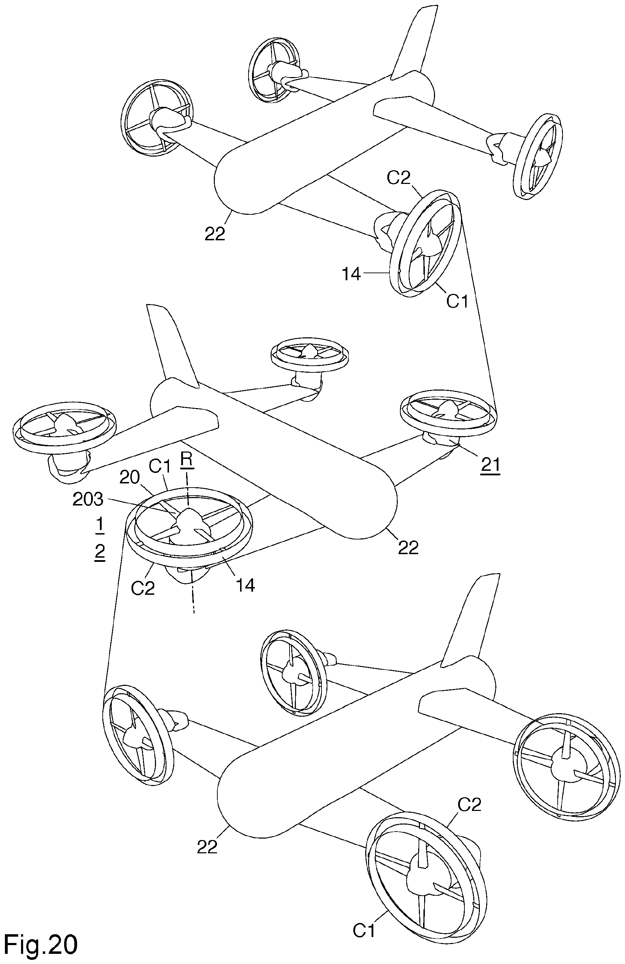

Fig. 20 oben zeigt ein Flugzeug 22 mit vier Mantelstromtriebwerken 1 im Fahrbetrieb, in der Mitte 22 im Startbetrieb und unten im Flugbetrieb. Die vier jeweils an die äußeren Enden der Tragflächen des Flugzeugs 22 angelenkten Mantelstromtriebwerke 1 können mittels einer nicht näher bezeichneten Gelenkanordnung so gedreht und in der jeweiligen Stellung arretiert werden, dass sie im Fahrbetrieb als Fahrwerk des Flugzeugs 22 mit Rädern und Reifen 14, im Startbetrieb als Rotoren für den Senkrechtstart des Flugzeugs 22 und im Flugbetrieb als Festpropeller 203 oder als Verstellpropeller für die Schuberzeugung dienen. Für den Fahrbetrieb weist die als Saugseite ausgebildete Außenseite des größeren Ringflügels C2 jeweils einen Reifen 14 auf. Das Flugzeug 22 hat vordere und hintere Tragflächen. Die vorderen Tagflächen sind starr mit der Unterseite des Rumpfs verbunden und weisen eine positive V-Stellung auf, während die hinteren Tragflächen mit der Oberseite des Rumpfs verbunden sind und eine negative V-Stellung aufweisen, sodass die Flügelenden und die Mantelstromtriebwerke 1 in einer Ebene angeordnet sind. Die Wirkung der Drehmomentstufe 2 des Mantelstromtriebwerks 1 entspricht dem in Fig. 1-5 ausführlich erläuterten Ausführungsbeispiel.

### Bezuszeichenübersicht

| | | | |
|---|---|---|---|
| Mantelstromtriebwerk | 1 | Drehmomentstufe | 2 |
| Rotationsachse | R | Mantel | 20 |
| Länge | x | Höhe | y |
| Ringflügel | C1,C2 | Zweistufiger Fan | 200 |
| Druckpunktlinie | q1,q2 | Verdichtermodul | 201 |
| Radius | r1,r2 | Jetantrieb | 202 |
| Mittelpunkt | M1,M2 | Festpropeller | 203 |
| Wirkungsebene | Q1,Q2 | Verstellpropeller | 204 |
| Schnittebene | N1,N2 | Ruderpropeller | 205 |
| Neigungswinkel | β1,β2 | Vertikale Drehachse | z |
| Leitring | 10 | Elektroantrieb | 21 |
| Leitdüse | 11 | Flugzeug | 22 |
| Leitfläche | 12 | Wasserfahrzeug | 23 |
| Asymmetrisches Flügelprofil | 13 | Strömung | F |
| Saugspitze | 131 | Konvergenter Konuswinkel | α1 |
| Tandemprofil | 132 | Divergenter Konuswinkel | α2 |
| Radius | r1a,r1b | Strömungsgeschwindigkeit | a |
| Flügelnase | n | Um laufgeschwindigkeit | b |
| Flügelhinterkante | m | Resultierende Anströmung | c |
| Profilsehne | p | Auftriebskraft | d |
| Steigungswinkel | δ | Vortriebskraft | e |
| Profiltiefe | t | Schubkraft | f |
| Nabe | H1,H2 | Tangentiale Antriebskraft | g |
| Welle | S1,S2 | Sogkraft | h |
| Rotorblatt | B1,B2 | Widerstand | j |
| Drehachse | u | Rotationswiderstand | k |
| Auslegungsschnelllaufzahl | λ | Fahrtwiderstand | l |
| Reifen | 14 | Versatz | v1,v2 |

## Patentansprüche

1. Mantelstromtriebwerk (1), das dazu ausgebildet ist, Schub für ein Flugzeug (22) oder für ein Wasserfahrzeug (23) zu erzeugen und mindestens eine von einem in Schubrichtung vorangestellten kleineren Ringflügel (C1) mit einem Radius (r1), von einem nachfolgenden größeren Ringflügel (C2) mit einem Radius (r2) gebildete Drehmomentstufe (2) und eine Rotationsachse (R) aufweist, wobei mindestens einer der Ringflügel (C1, C2) über Rotorblätter (B1, B2) mit einer Nabe (H1, H2) verbunden ist und um die Rotationsachse (R) rotierbar ausgebildet ist, welche Ringflügel (C1,C2) jeweils Wirkungsebenen (Q1,Q2) mit kreisförmigen Druckpunktlinien (q1,q2) haben, deren Mittelpunkte (M1,M2) auf der Rotationsachse (R) liegen und in einer mit einem Schnittwinkel von 20-90 Grad gegenüber der jeweiligen Wirkungsebene (Q1,Q2) geneigten Schnittebene (N1,N2) durch den betreffenden Mittelpunkt (M1,M2) ein strömungsdynamisch wirksames, asymmetrisches Flügelprofil (13) mit einer Profiltiefe (t), mit einer in Schubrichtung ausgerichteten Flügelnase (n) und einer sich zwischen der Flügelnase (n) und einer Flügelhinterkante (m) erstreckenden Profilsehne (p) aufweisen und die Druckpunktlinien (q1,q2) der beiden Ringflügel (C1,C2) entlang der Rotationsachse (R) der Länge (x) nach so hintereinander angeordnet und durch eine radiale Höhe (y) derart voneinander beabstandet sind, dass ein zweischichtiger erster Mantel (20) gebildet wird, wobei der kleinere Ringflügel (C1) mit einer der Rotationsachse (R) zugewandten Saugseite und einer äußeren Druckseite in einer von den Rotorblättern (B1,B2) induzierten Strömung (F) einen Leitring (10) und zusammen mit der Flügelnase (n) des größeren Ringflügels (C2) eine ringförmige Leitdüse (11) mit Leitflächen (12) für eine resultierende Anströmung (c) des größeren Ringflügels (C2) mit einem konvergenten oder mit einem divergenten Konuswinkel (α1,α2) bildet.

2. Mantelstromtriebwerk (1) nach Anspruch 1,
bei dem der von dem kleineren Ringflügel (C1) mit dem Radius (r1) gebildete Leitring (10) einteilig oder zweiteilig ausgebildet ist und in der Schnittebene (N1) ein einzelnes asymmetrisches Flügelprofil (13) mit einer der Rotationsachse (R) zugewandten Saugseite oder ein Tandemprofil (131) aufweist, das aus zwei asymmetrischen Flügelprofilen (13) mit den Radien (r1a,r1b) besteht, deren Saugseiten der Rotationsachse (R) zugewandt sind und deren Profilsehnen (p) in Bezug zu der Rotationsachse (R) einen in Richtung der Strömung (F) ansteigenden Steigungswinkel (δ) aufweisen, wobei der größere Ringflügel (C2) mit dem Radius (r2) ein asymmetrisches Flügelprofil (13) mit einer äußeren Saugseite, einer inneren Druckseite und mit einer parallel zu der Rotationsachse (R) angeordneten Profilsehne (p) hat.

3. Mantelstromtriebwerk (1) nach Anspruch 1 oder 2,
bei dem die Länge (x) der Drehmomentstufe (2), die den Abstand der beiden Ringflügel (C1,C2) auf der Rotationsachse (R) definiert, so gewählt ist, dass sich die Flügelhinterkante (m) des kleineren Ringflügels (C1) mit der Flügelnase (n) des größeren Ringflügels (C2) überlappt, wobei die Höhe (y) der Drehmomentstufe (2) bis zu der Hälfte der Länge (x) beträgt, um die ringförmige Leitdüse (11) mit den Leitflächen (12) zu bilden, wobei die Ringflügel (C1,C2) eine gleichgroße oder unterschiedliche Profiltiefe (t) aufweisen.

4. Mantelstromtriebwerk (1) nach einem der vorhergehenden Ansprüche,
bei dem sich an einem Paar von Ringflügeln (C1,C2) einer Drehmomentstufe (2), deren asymmetrische Flügelprofile (13) einander zugekehrte Druckseiten aufweisen, innerhalb der Strömung (F) eine Zirkulationsströmung einstellt, die sich als ein Zirkulationswirbel an der Außenseite des kleineren Ringflügels (C1) und an der Innenseite des größeren Ringflügels (C2) der Drehmomentstufe (2) verstärkt.

5. Mantelstromtriebwerk (1) nach einem der vorhergehenden Ansprüche, bei welchem die Rotorblätter bei mindestens einem der Ringflügel (C1, C2) radial ausgebildet sind.

6. Mantelstromtriebwerk (1) nach einem der vorhergehenden Ansprüche,
das für ein Flugzeug (22) ausgebildet ist und bei dem die Drehmomentstufe (2) von zwei der mit gegensinniger Drehrichtung um die Rotationsachse (R) rotierenden Ringflügeln (C1,C2) gebildet wird, die jeweils mittels von mindestens acht an einer Drehachse (u) verstellbaren Rotorblättern (B1,B2) mit den Naben (H1,H2) und mit konzentrisch und koaxial zueinander angeordneten Wellen (S1,S2) verbunden sind und in Richtung der Strömung (F) der Länge (x) nach und durch die radiale Höhe (y) als der Differenz zwischen den Radien (r1,r2) der kreisförmigen Druckpunktlinien (q1,q2) derart voneinander beabstandet sind, dass ein zweistufiger Fan (200) mit der fluiddynamisch wirksamen Drehmomentstufe (2) gebildet wird, wobei die Druckseiten der Ringflügel (C1,C2) einander zugekehrt sind und die Profilsehne (p) des kleineren Ringflügels (C1) in Richtung der Strömung (F) mit einem Steigungswinkel (δ) gegenüber der Rotationsachse (R) ansteigt und wobei die Profilsehne (p) des größeren Ringflügels (C2) parallel zu der Rotationsachse (R) ausgerichtet ist, sodass die Ringflügel (C1,C2) untereinander die ringförmige Leitdüse (11) mit Strömungsleitflächen (12) für die Anströmung des größeren Ringflügels (C2) mit einem divergenten Konuswinkel (α2) bilden.

7. Mantelstromtriebwerk (1) nach einem der vorhergehenden Ansprüche,
das für ein Flugzeug (22) ausgebildet ist und bei dem eine Mehrzahl innerhalb eines feststehenden zweiten Mantels (20') hintereinander angeordneter Festpropeller (203) ein Verdichtermodul (201) bilden, wobei ein in Richtung der Strömung (F) vorauslaufender Festpropeller (203) mindestens zwei kleinere Ringflügel (C1) aufweist und mittels der Rotorblätter (B1) mit einem mantelseitigen Läuferring eines in den feststehenden zweiten Mantel (20') integrierten, ersten Elektroantriebs (21) verbunden ist, während ein in Richtung der Strömung (F) folgender Festpropeller (203) mindestens zwei größere Ringflügel (C2) aufweist, die mittels der Rotorblätter (B2) mit einem nabenseitigen Läuferring eines zweiten Elektroantriebs (21) verbunden sind, sodass die Ringflügel (C1,C2) untereinander mehrere in Reihe hintereinander angeordnete Drehmomentstufen (2) des Verdichtermoduls (201) bilden und an dem Mantelstromtriebwerk (1) ein größerer zweistufiger Fan (200) vorgesehen ist, der auf der Rotationsachse (R) entweder vor oder hinter dem Verdichtermodul (201) angeordnet ist.

8. Mantelstromtriebwerk (1) nach einem der vorhergehenden Ansprüche,
das dazu eingerichtet ist, in der Startphase eines Flugzeugs (22) oder eines Wasserfahrzeugs (23) eine konvergente Strömung (F) zu induzieren, sodass der kleinere Ringflügel (C1) mit einem konvergenten Konuswinkel (α1) angeströmt wird und der Steigungswinkel (δ) der Profilsehne (p) des kleineren Ringflügels (C1) als Anstellwinkel wirkt,
und das dazu eingerichtet ist, mit dem Erreichen der Betriebsgeschwindigkeit den kleineren Ringflügel (C1) nur noch mit einer leicht konvergenten Strömung (F) anzuströmen, der mit seiner Flügelhinterkante (m) zusammen mit der Flügelnase (n) des größeren Ringflügels (C2) die ringförmige Leitdüse (11) der Drehmomentstufe (2) mit Leitflächen (12) für die resultierende Anströmung (c) des größeren Ringflügels (C2) mit dem divergenten Konuswinkel (α2) bildet, wobei das asymmetrische Flügelprofil (13) des größeren Ringflügels (C2) in der mit dem Schnittwinkel (β2) gegenüber der Wirkungsebene (Q2) geneigten Schnittebene (N2) an der Druckpunktlinie (q2) über den gesamten äußeren Umfang des Ringflügels (C2) eine mit einem Versatz (v2) an der Rotationsachse (R) angreifende Auftriebskraft (d) bewirkt, aus der in der zweiten Wirkungsebene (Q2) der Drehmomentstufe (2) eine in Drehrichtung wirkende tangentiale Antriebskraft (g) und eine in Fahrtrichtung des Mantelstromtriebwerks (1) wirkende Schubkraft (f) resultieren.

9. Mantelstromtriebwerk (1) nach einem der vorhergehenden Ansprüche,
bei dem die Saugseite des größeren Ringflügels (C2) an der Ringaußenseite liegt und einen Reifen (14) aufweist, der als ein Vollgummireifen oder als ein Luftreifen ausgebildet ist, sodass ein Fahrzeug (22,23) zeitweise auch an Land fahren kann, wobei das Mantelstromtriebwerk (1) dazu geeignet ist, verschwenkbar an Tragflächen eines Flugzeugs (22) oder an einen Rumpf eines Wasserfahrzeugs (23) angelenkt zu werden.

10. Mantelstromtriebwerk (1) nach einem der vorhergehenden Ansprüche,
das für ein Wasserfahrzeug (23) ausgebildet ist und entweder einen Festpropeller (203) mit einer Drehmomentstufe (2) aufweist, bei dem die Ringflügel (C1,C2) mittels von drei Rotorblättern (B1) und der Nabe (H1) starr mit der Welle (S1) verbunden sind und mit einer gleichsinnigen Drehrichtung um die Rotationsachse (R) rotieren, oder welches Mantelstromtriebwerk (1) eine von zwei mit gegensinniger Drehrichtung um die Rotationsachse (R) rotierenden Festpropellern (203) gebildete Drehmomentstufe (2) aufweist, wobei der erste Festpropeller (203) mit dem kleineren Ringflügel (C1) in der ersten Wirkungsebene (Q1) der Drehmomentstufe (2) mittels von drei Rotorblättern (B1) mit der Nabe (H1) und mit der Welle (S1) verbunden ist, während der zweite Festpropeller (203) mit dem größeren Ringflügel (C2) in der zweiten Wirkungsebene (Q2) der Drehmomentstufe (2) mittels von drei Rotorblättern (B2) mit der Nabe (H2) und mit der Welle (S2) verbunden ist und eine der Wellen (S1 ,S2) als eine Hohlwelle ausgebildet ist.

11. Mantelstromtriebwerk (1) nach einem der vorhergehenden Ansprüche,
das für ein Wasserfahrzeug (23) ausgebildet ist, bei dem der kleinere Ringflügel (C1) feststeht und dazu geeignet ist, am Heck eines Wasserfahrzeugs (23) starr mit dem Unterwasserschiff verbunden zu werden, während der größere Ringflügel (C2) zusammen mit den Rotorblättern (B2), mit der Nabe (H2) und mit der Welle (S2) als ein Festpropeller (203) um die Rotationsachse (R) rotiert, wobei sich die beiden Ringflügel (C1,C2) in Richtung der Strömung (F) derart überlappen, dass eine konvexe Saugspitze (131) an der der Rotationsachse (R) zugewandten Saugseite des größeren Ringflügels (C2) zusammen mit einer konkaven äußeren Druckseite des als Leitring (10) ausgebildeten kleineren Ringflügels (C1) die ringförmige Leitdüse (11) für die Anströmung des größeren Ringflügels (C2) mit einem konvergenten Konuswinkel (α1) bildet und der feststehende kleinere Ringflügel (C1) in der Wirkungsebene (Q1) eine Schubkraft (f) bewirkt und der größere Ringflügel (C2) in der Wirkungsebene (Q2) eine Schubkraft (f) und eine über den gesamten äußeren Umfang mit einem Versatz (v2) an der Rotationsachse (R) angreifende Auftriebskraft (d) erzeugt, wobei in der zweiten Wirkungsebene (Q2) der Drehmomentstufe (2) aus der Auftriebskraft (d) die in Drehrichtung wirkende tangentiale Antriebskraft (g) und die in Fahrtrichtung des Wasserfahrzeugs (23) wirkende Schubkraft (f) resultieren.

12. Mantelstromtriebwerk (1) nach einem der vorhergehenden Ansprüche,
das für ein Wasserfahrzeug (23) ausgebildet ist, bei dem die Drehmomentstufe (2) an einem Ruderpropeller (205) ausgebildet ist, der um eine Drehachse (z) drehbar mit dem Unterwasserschiff des Wasserfahrzeugs (23) verbunden ist, wobei die Drehmomentstufe (2) von einem rotierenden kleineren Ringflügel (C1) und von einem feststehenden größeren Ringflügel (C2) gebildet wird und der größere Ringflügel (C2) eine parallel zu der Rotationsachse (R) ausgerichtete Profilsehne (p) sowie eine der Rotationsachse (R) zugewandte Saugseite mit einer konvexen Saugspitze (131) aufweist und der kleinere Ringflügel (C1) mit verstellbaren Rotorblättern (B1), mit der Nabe (H1) und mit der Welle (S1) einen Verstellpropeller (204) bildet, der als Leitring (10) eine konvergente Anströmung des größeren Ringflügels (C2) bewirkt und dessen äußere Druckseite zusammen mit der konvexen Saugspitze (131) des größeren Ringflügels (C2) die ringförmige Leitdüse (11) für die Anströmung des größeren Ringflügels (C2) mit einem konvergenten Konuswinkel (α1) bildet, sodass beide Ringflügel in den Wirkungsebenen (Q1,Q2) eine an den kreisförmigen Druckpunktlinien (q1,q2) angreifende Schubkraft (f) erzeugen und der kleinere Ringflügel (C1) über den gesamten Umfang der Innenseite eine Auftriebskraft (d) bewirkt, aus der in der Wirkungsebene (Q1) der Drehmomentstufe (2) eine in Drehrichtung wirkende, mit einem Versatz (v1) an der Rotationsachse (R) angreifende tangentiale Antriebskraft (g) und eine in Fahrtrichtung des Wasserfahrzeugs (23) wirkende Schubkraft (f) resultieren.

13. Mantelstromtriebwerk (1) nach einem der vorhergehenden Ansprüche,
das für ein Wasserfahrzeug (23) ausgebildet ist, bei dem zwei gegensinnig rotierende Verstellpropeller (204) innerhalb eines von dem Unterwasserschiff des Wasserfahrzeugs (23) gebildeten dritten Mantels (20") angeordnet sind und mit konzentrisch und koaxial zu der Rotationsachse (R) rotierenden Wellen (S1,S2) mit einem im Inneren des Wasserfahrzeugs (23) arbeitenden Elektroantrieb (21) verbunden sind und einen Jetantrieb (202) für das Wasserfahrzeug (23) bilden.

14. Mantelstromtriebwerk (1) nach einem der vorhergehenden Ansprüche, bei welchem der zweischichtige Mantel (20) im Betrieb eines Fahrzeugs (22,23) fluiddynamisch als Drehmomentstufe (2) wirksam ist, und bei welchem die Drehmomentstufe (2) durch den durch den kleineren Ringflügel (C1) gebildeten Leitring und durch die durch den größeren Ringflügel (C2) gebildete Leitdüse an mindestens einem der beiden Ringflügel (C1,C2) ein Drehmoment an der Rotationsachse bewirkt.

## Claims

1. A ducted-fan engine (1) which is formed to generate thrust for an aircraft (22) or for a watercraft (23) and has at least one torque stage (2) formed by a smaller ring vane (C1) with a radius (r1) positioned upstream in the thrust direction, by a downstream larger ring vane (C2) with a radius (r2) and an axis of rotation (R), wherein at least one of the ring vanes (C1, C2) is connected to a hub (H1, H2) via rotor blades (B1, B2) and is formed so as to be rotatable about the axis of rotation (R), which ring vanes (C1,C2) each have planes of action (Q1,Q2) with circular pressure point lines (q1,q2), whose center points (M1, M2) lie on the axis of rotation (R) and in a sectional plane (N1, N2) inclined at an intersection angle of 20-90 degrees relative to the respective plane of action (Q1, Q2) through the respective center point (M1, M2) have a flow-dynamically effective asymmetrical vane profile (13) with a profile depth (t), with a leading edge (n) oriented in the direction of thrust and a profile chord (p) extending between the leading edge (n) and a trailing edge (m) of the vane and the pressure point lines (q1, q2) of the two ring vanes (C1, C2) are disposed one behind the other along the axis of rotation (R) along the length (x) and spaced apart by a radial height (y) in such a way that a two-layer first jacket (20) is formed, wherein the smaller ring vane (C1) with a suction side facing the axis of rotation (R) and an outer pressure side in a flow (F) induced by the rotor blades (B1, B2) forms a guide ring (10) and, together with the leading edge (n) of the larger ring vane (C2), an annular guide nozzle (11) with guide surfaces (12) for a resulting flow (c) to the larger ring vane (C2) with a convergent or divergent cone angle (α1, α2).

2. The ducted-fan engine (1) according to claim 1,
in which the guide ring (10) formed by the smaller ring vane (C1) with the radius (r1) is formed in one or two parts and has, in the sectional plane (N1), a single asymmetrical vane profile (13) with a suction side facing the axis of rotation (R), or a tandem profile (131), which consists of two asymmetrical vane profiles (13) with the radii (r1a, r1b), whose suction sides face the axis of rotation (R) and whose profile chords (p) have a pitch angle (δ) ascending in the direction of the flow (F) in relation to the axis of rotation (R), wherein the larger ring vane (C2) with the radius (r2) has an asymmetrical vane profile (13) with an outer suction side, an inner pressure side and with a profile chord (p) disposed parallel to the axis of rotation (R).

3. The ducted-fan engine (1) according to claim 1 or 2,
in which the length (x) of the torque stage (2), which defines the distance between the two ring vanes (C1, C2) on the axis of rotation (R), is selected such that the trailing edge (m) of the smaller ring vane (C1) overlaps with the leading edge (n) of the larger ring vane (C2), wherein the height (y) of the torque stage (2) is up to half the length (x) in order to form the annular guide nozzle (11) with the guide surfaces (12), wherein the ring vanes (C1, C2) have an equal or different profile depth (t).

4. The ducted-fan engine (1) according to one of the preceding claims, in which a circulation flow is established within the flow (F) on a pair of ring vanes (C1, C2) of a torque stage (2), the asymmetrical vane profiles (13) of which have pressure sides facing each other, which circulation flow is amplified as a circulation vortex on the outside of the smaller ring vane (C1) and on the inside of the larger ring vane (C2) of the torque stage (2).

5. The ducted-fan engine (1) according to one of the preceding claims,
wherein the rotor blades on at least one of the ring vanes (C1, C2) are formed radially.

6. The ducted-fan engine (1) according to one of the preceding claims, which is formed for an aircraft (22) and in which the torque stage (2) is formed by two of the ring vanes (C1, C2) rotating in opposite directions about the axis of rotation (R), which are each connected by means of at least eight rotor blades (B1, B2) adjustable on an axis of rotation (u) to the hubs (H1, H2) and to shafts (S1, S2) disposed concentrically and coaxially to one another and are spaced from one another in the direction of the flow (F) along the length (x) and
by the radial height (y) as the difference between the radii (r1, r2) of the circular pressure point lines (q1, q2) in such a way that a two-stage fan (200) with the fluid-dynamically effective torque stage (2) is formed, wherein the pressure sides of the ring vanes (C1,C2) face each other and the chord (p) of the smaller ring vane (C1) ascends in the direction of the flow (F) with a pitch angle (δ) relative to the axis of rotation (R) and wherein the chord (p) of the larger ring vane (C2) is oriented parallel to the axis of rotation (R),
so that the ring vanes (C1, C2) form between them the annular guide nozzle (11) with flow guide surfaces (12) for the flow to the larger ring vane (C2) with a divergent cone angle (α2).

7. The ducted-fan engine (1) according to one of the preceding claims, which is formed for an aircraft (22) and in which a plurality of fixed propellers (203) disposed one behind the other within a fixed second jacket (20') form a compressor module (201), wherein an upstream fixed propeller (203) in the direction of the flow (F) has at least two smaller ring vanes (C1) and is connected by means of the rotor blades (B1) to a jacket-side rotor ring of a first electric drive (21) integrated in the fixed second jacket (20'), while a fixed propeller (203) positioned downstream in the direction of the flow (F) has at least two larger ring vanes (C2) which are connected by means of the rotor blades (B2) to a hub-side rotor ring of a second electric drive (21), so that the ring vanes (C1, C2) form a plurality of torque stages (2) of the compressor module (201) disposed in series one behind the other, and a larger two-stage fan (200) is provided on the ducted-fan engine (1), which fan is disposed on the axis of rotation (R) either in front of or behind the compressor module (201).

8. The ducted-fan engine (1) according to one of the preceding claims, which is arranged to induce a convergent flow (F) in the take-off phase of an aircraft (22) or a watercraft (23), so that the smaller ring vane (C1) is flowed to with a convergent cone angle (α1) and the pitch angle (δ) of the profile chord (p) of the smaller ring vane (C1) acts as the angle of attack, and which is arranged to flow to the smaller ring vane (C1) only with a slightly convergent flow (F) when the operating speed is reached, which smaller ring vane with its trailing edge (m) together with the leading edge (n) of the larger ring vane (C2) forms the annular guide nozzle (11) of the torque stage (2) with guide surfaces (12) for the resulting flow (c) to the larger ring vane (C2) with the divergent cone angle (α2), wherein the asymmetrical vane profile (13) of the larger ring vane (C2) in the sectional plane (N2) inclined at the intersection angle (β2) relative to the plane of action (Q2) at the pressure point line (q2) causes a lift force (d) acting with an offset (v2) on the axis of rotation (R) over the entire outer circumference of the ring vane (C2), from which lift force a tangential driving force (g) acting in the direction of rotation and a thrust force (f) acting in the direction of travel of the ducted-fan engine (1) result in the second plane of action (Q2) of the torque stage (2).

9. The ducted-fan engine (1) according to one of the preceding claims,
wherein the suction side of the larger ring vane (C2) is located on the outside of the ring and has a tire (14) which is formed as a solid rubber tire or as a pneumatic tire, so that a vehicle (22, 23) can also temporarily travel on land, wherein the ducted-fan engine (1) is suitable for being pivotably hinged to support surfaces of an aircraft (22) or to a hull of a watercraft (23).

10. The ducted-fan engine (1) according to one of the preceding claims, which is formed for a watercraft (23) and has either a fixed propeller (203) with a torque stage (2), in which the ring vanes (C1, C2) are rigidly connected to the shaft (S1) by means of three rotor blades (B1) and the hub (H1) and rotate about the axis of rotation (R) in the same direction, or which ducted-fan engine (1) has a torque stage (2) formed by two fixed propellers (203) rotating about the axis of rotation (R) in opposite directions, wherein the first fixed propeller (203) with the smaller ring vane (C1) is connected to the hub (H1) and to the shaft (S1) in the first plane of action (Q1) of the torque stage (2) by means of three rotor blades (B1), while the second fixed propeller (203) with the larger ring vane (C2) is connected to the hub (H2) and to the shaft (S2) in the second plane of action (Q2) of the torque stage (2) by means of three rotor blades (B2) and one of the shafts (S1, S2) is formed as a hollow shaft.

11. The ducted-fan engine (1) according to one of the preceding claims, which is formed for a watercraft (23), in which the smaller ring vane (C1) is fixed and is suitable for being rigidly connected to the underwater hull at the stern of a watercraft (23), while the larger ring vane (C2) together with the rotor blades (B2), with the hub (H2) and with the shaft (S2) rotates as a fixed propeller (203) about the axis of rotation (R), wherein the two ring vanes (C1, C2) overlap in the direction of the flow (F) in such a way that a convex suction tip (131) on the suction side of the larger ring vane (C2) facing the axis of rotation (R) together with a concave outer pressure side of the smaller ring vane (C1) formed as a guide ring (10) form the annular guide nozzle (11) for the flow to the larger ring vane (C2) with a convergent cone angle (α1) and the fixed smaller ring vane (C1) produces a thrust force (f) in the plane of action (Q1) and the larger ring vane (C2) produces a thrust force (f) in the plane of action (Q2) and a lift force (d) acting with an offset (v2) on the axis of rotation (R) over the entire outer circumference, wherein in the second plane of action (Q2) of the torque stage (2), the tangential driving force (g) acting in the direction of rotation and the thrust force (f) acting in the direction of travel of the watercraft (23) result from the lift force (d).

12. The ducted-fan engine (1) according to one of the preceding claims, which is formed for a watercraft (23), in which the torque stage (2) is formed on a rudder propeller (205), which is connected to the underwater hull of the watercraft (23) so as to be rotatable about an axis of rotation (z), wherein the torque stage (2) is formed by a rotating smaller ring vane (C1) and by a fixed larger ring vane (C2) and the larger ring vane (C2) has a profile chord (p) oriented parallel to the axis of rotation (R) and a suction side facing the axis of rotation (R) with a convex suction tip (131) and the smaller ring vane (C1) with adjustable rotor blades (B1), with the hub (H1) and with the shaft (S1) forms a controllable pitch propeller (204), which, as a guide ring (10), causes a convergent flow to the larger ring vane (C2) and whose outer pressure side together with the convex suction tip (131) of the larger ring vane (C2) forms the annular guide nozzle (11) for the flow to the larger ring vane (C2) with a convergent cone angle (α1), so that both ring vanes in the planes of action (Q1, Q2) generate a thrust force (f) acting on the circular pressure point lines (q1, q2) and the smaller ring vane (C1) produces a lift force (d) over the entire circumference of the inner side, from which lift force a tangential drive force (g) acting in the direction of rotation and acting with an offset (v1) on the axis of rotation (R) and a thrust force (f) acting in the direction of travel of the watercraft (23) result in the plane of action (Q1) of the torque stage (2).

13. The ducted-fan engine (1) according to one of the preceding claims, which is formed for a watercraft (23), wherein two controllable pitch propellers (204) rotating in opposite directions are disposed inside a third jacket (20") formed by the underwater hull of the watercraft (23) and are connected to shafts (S1, S2) rotating concentrically and coaxially to the axis of rotation (R) to an electric drive (21) operating inside the watercraft (23) and forming a jet propulsion (202) for the watercraft (23).

14. The ducted-fan engine (1) according to one of the preceding claims, in which the two-layered jacket (20) is fluid-dynamically effective as a torque stage (2) during operation of a vehicle (22, 23), and in which the torque stage (2) causes a torque on the axis of rotation on at least one of the two ring vanes (C1, C2) by means of the guide ring formed by the smaller ring vane (C1) and by means of the guide nozzle formed by the larger ring vane (C2).

## Revendications

1. Turboréacteur à double flux (1), conçu pour générer une poussée pour un aéronef (22) ou pour un véhicule nautique (23) et présentant au moins un étage de production de couple (2), formé par une aube circulaire (C1) plus petite, de rayon (r1), placée en tête dans le sens de la poussée, une aube circulaire (C2) plus grande, de rayon (r2), placée à la suite, et un axe de rotation (R), au moins une des aubes circulaires (C1, C2) étant reliée à un moyeu (H1, H2) par l'intermédiaire de pales de rotor (B1, B2) et conçue de manière à pouvoir tourner autour de l'axe de rotation (R), lesquelles aubes circulaires (C1, C2) ayant chacune des plans d'action (Q1, Q2) avec des lignes de points de pression (q1, q2) circulaires, dont les centres (M1, M2) se trouvent sur l'axe de rotation (R) et présentent, dans un plan de coupe (N1, N2) incliné d'un angle de coupe de 20 à 90 degrés par rapport au plan d'action (Q1, Q2) respectif passant par le centre (M1, M2) concerné, un profil d'aube asymétrique (13) agissant de manière fluidodynamique, avec une profondeur de profil (t), avec un nez d'aube (n) orienté dans le sens de la poussée et une corde de profil (p) s'étendant entre le nez d'aube (n) et un bord de fuite d'aube (m), et les lignes de points de pression (q1, q2) des deux aubes circulaires (C1, C2) étant disposées l'une derrière l'autre le long de l'axe de rotation (R) dans le sens de la longueur (x) et espacées l'une de l'autre d'une hauteur radiale (y) de manière à former une première enveloppe à deux couches (20), l'aube circulaire (C1) plus petite avec un côté aspiration tourné vers l'axe de rotation (R) et un côté refoulement extérieur formant, dans un flux (F) généré par les pales de rotor (B1, B2), un anneau de guidage (10) et, conjointement avec le nez d'aube (n) de l'aube circulaire (C2) plus grande, une buse de guidage circulaire (11) avec des surfaces de guidage (12) pour un afflux (c) résultant de l'aube circulaire (C2) plus grande avec un angle de cône convergent ou divergent (α1, α2).

2. Turboréacteur à double flux (1) selon la revendication 1,
dans lequel l'anneau de guidage (10) formé par l'aube circulaire (C1) plus petite, de rayon (r1), est réalisé en une seule pièce ou en deux pièces et présente, dans le plan de coupe (N1), un seul profil d'aube asymétrique (13) avec un côté aspiration tourné vers l'axe de rotation (R) ou un profil en tandem (131) qui est constitué de deux profils d'aube asymétriques (13) de rayons (r1a, r1b), dont les côtés aspiration sont tournés vers l'axe de rotation (R) et dont les cordes de profil (p) présentent, par rapport à l'axe de rotation (R), un angle d'inclinaison (δ) croissant dans la direction du flux (F), l'aube circulaire (C2) plus grande, de rayon (r2), ayant un profil d'aube asymétrique (13) avec un côté aspiration extérieur, un côté refoulement intérieur et avec une corde de profil (p) disposée parallèlement à l'axe de rotation (R).

3. Turboréacteur à double flux (1) selon la revendication 1 ou 2,
dans lequel la longueur (x) de l'étage de production de couple (2), qui définit la distance entre les deux aubes circulaires (C1, C2) sur l'axe de rotation (R), est choisie de telle sorte que le bord de fuite (m) de l'aube circulaire (C1) plus petite se chevauche avec le nez d'aube (n) de l'aube circulaire (C2) plus grande, la hauteur (y) de l'étage de production de couple (2) pouvant atteindre la moitié de la longueur (x) pour former la buse de guidage circulaire (11) avec les surfaces de guidage (12), les aubes circulaires (C1, C2) ayant une profondeur de profil (t) égale ou différente.

4. Turboréacteur à double flux (1) selon l'une des revendications précédentes, dans lequel, sur une paire d'aubes circulaires (C1, C2) d'un étage de production de couple (2), dont les profils d'aubes asymétriques (13) présentent des côtés refoulement se faisant face, il s'établit dans le flux (F) un flux de circulation qui s'amplifie sous forme d'un tourbillon de circulation sur le côté extérieur de l'aube circulaire (C1) plus petite et sur le côté intérieur de l'aube circulaire (C2) plus grande de l'étage de production de couple (2).

5. Turboréacteur à double flux (1) selon l'une des revendications précédentes, dans lequel les pales de rotor sont radiales pour au moins une des aubes circulaires (C1, C2).

6. Turboréacteur à double flux (1) selon l'une des revendications précédentes, qui est conçu pour un aéronef (22) et dans lequel l'étage de production de couple (2) est formé par deux des aubes circulaires (C1, C2) tournant en sens inverse autour de l'axe de rotation (R), qui sont reliées respectivement aux moyeux (H1, H2) au moyen d'au moins huit pales de rotor (B1, B2) réglables sur un axe de rotation (u) et à des arbres (S1, S2) disposés concentriquement et coaxialement les uns par rapport aux autres et sont espacées les unes des autres dans la direction du flux (F) selon la longueur (x) et par la hauteur radiale (y) en tant que différence entre les rayons (r1, r2) des lignes de points de pression (q1, q2) circulaires de telle sorte qu'un ventilateur à deux étages (200) est formé avec l'étage de production de couple (2) efficace en termes de dynamique des fluides, les côtés refoulement des aubes circulaires (C1, C2) étant tournés l'un vers l'autre et la corde de profil (p) de l'aube circulaire (C1) plus petite montant en direction du flux (F) avec un angle d'inclinaison (δ) par rapport à l'axe de rotation (R) et la corde de profil (p) de l'aube circulaire (C2) plus grande étant orientée parallèlement à l'axe de rotation (R), de sorte que les aubes circulaires (C1, C2) forment entre elles la buse de guidage circulaire (11) avec des surfaces de guidage de flux (12) pour l'afflux vers l'aube circulaire (C2) plus grande avec un angle de cône divergent (α2).

7. Turboréacteur à double flux (1) selon l'une des revendications précédentes, qui est conçu pour un aéronef (22) et dans lequel une pluralité d'hélices fixes (203) disposées les unes derrière les autres à l'intérieur d'une deuxième enveloppe fixe (20') forment un module de compression (201), une hélice fixe (203) située en amont dans le sens du flux (F) présentant au moins deux aubes circulaires (C1) plus petites et étant reliée au moyen des pales de rotor (B1) à un anneau de rotor côté enveloppe d'un premier entraînement électrique (21) intégré dans la deuxième enveloppe fixe (20'), tandis qu'une hélice fixe (203), qui suit dans la direction du flux (F), présente au moins deux aubes circulaires (C2) plus grandes, qui sont reliées au moyen des pales de rotor (B2) à une bague de rotor côté moyeu d'un deuxième entraînement électrique (21), de sorte que les aubes circulaires (C1, C2) forment entre elles plusieurs étages de production de couple (2) du module de compresseur (201) disposés en série les uns derrière les autres et qu'un ventilateur à deux étages (200) plus grand est prévu sur le turboréacteur à double flux (1), lequel est disposé sur l'axe de rotation (R) devant ou derrière le module de compresseur (201).

8. Turboréacteur à double flux (1) selon l'une des revendications précédentes, qui est conçu pour induire un flux (F) convergent lors de la phase de décollage d'un aéronef (22) ou de démarrage d'un véhicule nautique (23), de sorte que l'aube circulaire (C1) plus petite est soumise à un flux avec un angle de cône convergent (α1) et que l'angle d'inclinaison (δ) de la corde de profil (p) de l'aube circulaire (C1) plus petite agit comme angle d'attaque, et qui est conçu pour, lorsque la vitesse de fonctionnement est atteinte, ne soumettre l'aube circulaire (C1) plus petite qu'à un flux (F) légèrement convergent, qui forme avec son bord de fuite d'aube (m), conjointement avec le nez d'aube (n) de l'aube circulaire (C2) plus grande, la buse de guidage circulaire (11) de l'étage de production de couple (2) avec des surfaces de guidage (12) pour l'afflux (c) résultant vers l'aube circulaire (C2) plus grande avec l'angle de cône divergent (α2), le profil d'aube asymétrique (13) de l'aube circulaire (C2) plus grande provoquant, dans le plan de coupe (N2) incliné de l'angle de coupe (β2) par rapport au plan d'action (Q2), au niveau de la ligne du point de pression (q2), sur toute la périphérie extérieure de l'aube circulaire (C2), une force de portance (d) agissant avec un décalage (v2) sur l'axe de rotation (R), dont résultent, dans le deuxième plan d'action (Q2) de l'étage de production de couple (2), une force motrice tangentielle (g) agissant dans le sens de la rotation et une force de poussée (f) agissant dans le sens de la marche du turboréacteur à double flux (1).

9. Turboréacteur à double flux (1) selon l'une des revendications précédentes, dans lequel le côté aspiration de l'aube circulaire (C2) plus grande se trouve sur le côté extérieur circulaire et présente un pneu (14) qui est conçu comme un pneu en caoutchouc plein ou comme un pneu à air, de sorte qu'un véhicule (22, 23) peut également se déplacer temporairement sur la terre ferme, le turboréacteur à double flux (1) étant adapté pour être articulé de manière pivotante sur des surfaces portantes d'un aéronef (22) ou sur une coque d'un véhicule nautique (23).

10. Turboréacteur à double flux (1) selon l'une des revendications précédentes, conçu pour un véhicule nautique (23) et comprenant soit une hélice fixe (203) avec un étage de production de couple (2), dans laquelle les aubes circulaires (C1, C2) sont reliées rigidement à l'arbre (S1) au moyen de trois pales de rotor (B1) et du moyeu (H1) et tournent avec un sens de rotation identique autour de l'axe de rotation (R), soit lequel turboréacteur à double flux (1) présentant un étage de production de couple (2) formé par deux hélices fixes (203) tournant avec un sens de rotation opposé autour de l'axe de rotation (R), la première hélice fixe (203) dotée de l'aube circulaire (C1) plus petite étant reliée au moyeu (H1) et à l'arbre (S1) dans le premier plan d'action (Q1) de l'étage de production de couple (2) au moyen de trois pales de rotor (B1), la deuxième hélice fixe (203) dotée de l'aube circulaire (C2) plus grande étant reliée au moyeu (H2) et à l'arbre (S2) dans le deuxième plan d'action (Q2) de l'étage de production de couple (2) au moyen de trois pales de rotor (B2) et l'un des arbres (S1, S2) étant conçu comme un arbre creux.

11. Turboréacteur à double flux (1) selon l'une des revendications précédentes, conçu pour un véhicule nautique (23), dans lequel l'aube circulaire (C1) plus petite est fixe et adaptée pour être reliée de manière rigide à la carène, à l'arrière d'un véhicule nautique (23), tandis que l'aube circulaire (C2) plus grande tourne avec les pales de rotor (B2), avec le moyeu(H2) et avec l'arbre (S2) comme une hélice fixe (203) autour de l'axe de rotation (R), les deux aubes circulaires (C1, C2) se chevauchant dans la direction du flux (F) de telle sorte qu'une pointe d'aspiration convexe (131) sur le côté aspiration de l'aube circulaire (C2) plus grande tourné vers l'axe de rotation (R) forme, conjointement avec un côté refoulement extérieur concave de l'aube circulaire (C1) plus petite réalisée sous forme d'anneau de guidage (10), la buse de guidage circulaire (11) pour l'afflux vers l'aube circulaire (C2) plus grande avec un angle de cône convergent (α1) et que l'aube circulaire (C1) plus petite fixe provoque une force de poussée (f) dans le plan d'action (Q1) et que l'aube circulaire (C2) plus grande produit une force de poussée (f) dans le plan d'action (Q2) et une force de portance (d) agissant sur l'axe de rotation (R) avec un décalage (v2) sur toute la périphérie extérieure, la force d'entraînement tangentielle (g) agissant dans le sens de la rotation et la force de poussée (f) agissant dans le sens de la marche du véhicule nautique (23) résultant dans le deuxième plan d'action (Q2) de l'étage de production de couple (2) de la force de portance (d).

12. Turboréacteur à double flux (1) selon l'une des revendications précédentes, conçu pour un véhicule nautique (23), dans lequel l'étage de production de couple (2) est formé sur une hélice directionnelle (205) reliée en rotation autour d'un axe de rotation (z) à la carène du véhicule nautique (23), l'étage de production de couple (2) étant formé par une aube circulaire (C1) plus petite rotative et une aube circulaire (C2) plus grande fixe, et l'aube circulaire (C2) plus grande présentant une corde de profil (p) orientée parallèlement à l'axe de rotation (R) ainsi qu'un côté aspiration orienté vers l'axe de rotation (R) avec une pointe d'aspiration convexe (131), et l'aube circulaire (C1) plus petite formant avec des pales de rotor (B1) réglables, avec le moyeu (H1) et avec l'arbre (S1), une hélice à angle variable (204), qui, en tant qu'anneau de guidage (10), provoque un afflux vers l'aube circulaire (C2) plus grande et dont le côté refoulement extérieur forme, avec la pointe d'aspiration convexe (131) de l'aube circulaire (C2) plus grande, la buse de guidage circulaire (11) pour l'afflux vers l'aube circulaire (C2) plus grande avec un angle de cône convergent (α1), de sorte que les deux aubes circulaires génèrent dans les plans d'action (Q1, Q2) une force de poussée (f) s'exerçant sur les lignes de points de pression (q1, q2) circulaires et que l'aube circulaire (C1) plus petite génère une force de portance (d) sur toute la circonférence du côté intérieur, de laquelle résultent, dans le plan d'action (Q1) de l'étage de production de couple (2), une force d'entraînement tangentielle (g) agissant dans le sens de la rotation et s'appliquant avec un décalage (v1) sur l'axe de rotation (R) et une force de poussée (f) agissant dans le sens de la marche du véhicule nautique (23).

13. Turboréacteur à double flux (1) selon l'une des revendications précédentes, conçu pour un véhicule nautique (23), dans lequel deux hélices à angle variable (204) tournant en sens inverse sont disposées à l'intérieur d'une troisième enveloppe (20") formée par la carène du véhicule nautique (23) et sont reliées par des arbres (S1, S2) tournant concentriquement et coaxialement à l'axe de rotation (R) à un entraînement électrique (21) fonctionnant à l'intérieur du véhicule nautique (23) et formant une propulsion à réaction (202) pour le véhicule nautique (23).

14. Turboréacteur à double flux (1) selon l'une des revendications précédentes, dans lequel l'enveloppe à deux couches (20) agit de manière fluidodynamique en tant qu'étage de production de couple (2) pendant le fonctionnement d'un véhicule (22, 23), et dans lequel l'étage de production de couple (2) provoque un couple sur l'axe de rotation au moyen de l'anneau de guidage formé par l'aube circulaire (C1) plus petite et au moyen de la buse de guidage formée par l'aube circulaire (C2) plus grande sur au moins l'une des deux aubes circulaires (C1, C2).
